# EUROPÄISCHE PATENTSCHRIFT

(11) **EP 2 916 996 B1**
(45) Veröffentlichungstag und Bekanntmachung des Hinweises auf die Patenterteilung: **25.05.2016**
(21) Anmeldenummer: 13786489.8
(22) Anmeldetag: 06.11.2013
(51) Int. Cl.: B24B 5/42, B24B 5/02, B24B 19/12, B24B 49/04, B23Q 17/20, G01B 3/20, G05B 19/18

(54) **WERKZEUGMASCHINE UND VERFAHREN ZUR VERMESSUNG EINES WERKSTÜCKS**
MACHINE TOOL AND METHOD FOR MEASURING A WORKPIECE
MACHINE-OUTIL ET PROCÉDÉ DE MESURAGE D'UNE PIÈCE

(30) Priorität: 07.11.2012 DE 102012110673
(43) Veröffentlichungstag der Anmeldung: 16.09.2015
(73) Patentinhaber: Fritz Studer AG, 3612 Steffisburg (CH)
(72) Erfinder: SENN, Andreas, CH-3257 Ammerzwil (CH); FABRIS, Walter, CH-3661 Uetendorf (CH); ZWAHLEN, Reto, CH-3613 Steffisburg (CH); GAEGAUF, Fred, CH-6332 Hagendorn (CH)
(74) Vertreter: Witte, Weller & Partner Patentanwälte mbB
(86) Internationale Anmeldenummer: PCT/EP2013/073111
(87) Internationale Veröffentlichungsnummer: WO 2014/072314

(56) Entgegenhaltungen:
- WO-A1-2013/045484
- WO-A2-01/98847
- DE-A1- 19 616 353
- DE-A1-102009 042 252

## Beschreibung

Die Erfindung betrifft eine Werkzeugmaschine, insbesondere eine Schleifmaschine, mit einer Werkstückaufnahme, einer Werkzeugeinheit, einer Messeinrichtung und mit einer Steuereinrichtung, die mit der Messeinrichtung und der Werkzeugeinheit koppelbar ist. Die Erfindung betrifft ferner ein Verfahren zur Vermessung eines Werkstücks in einer Werkzeugmaschine, insbesondere einer Schleifmaschine.

Aus der WO 01/98847 A2 ist eine Werkzeugmaschine bekannt, die wenigstens eine Spindel zur Aufnahme und zum Drehantrieb eines Werkstücks, zumindest eine Bearbeitungseinheit zur Bewegung eines Werkzeugs, beispielsweise eines Scheibenfräsers zumindest in einer X-Richtung in Abhängigkeit von einer Drehlage einer Werkstückspindel, und eine Messvorrichtung, insbesondere eine Rundheits-Messvorrichtung, aufweist, wobei die Messvorrichtung direkt an einem Support des Werkzeugs angeordnet ist. Die WO 01/98847 A2 offenbart weitere Merkmale des Oberbegriffs des Anspruchs 1.

Werkzeugmaschinen, insbesondere Schleifmaschinen, sind im Stand der Technik bekannt. So können beispielsweise Rundschleifmaschinen rotationssymmetrische Werkzeuge, etwa Schleifscheiben, aufweisen, die in geeigneter Weise mit einem Werkstück zur Materialabtragung zusammenwirken können. Rundschleifmaschinen können beispielsweise zum Außenrundschleifen, Innenrundschleifen oder zum Einstechschleifen bzw. Schrägeinstechschleifen ausgebildet sein. Neben Schleifscheiben können beim Rundschleifen grundsätzlich auch Schleifbänder zur Anwendung kommen. Neben rotationssymmetrischen Flächen können etwa auch exzentrisch ausgebildete Werkstück flächen bearbeitet werden, wenn die Werkstückaufnahme und die Werkzeugeinheit in geeigneter Weise antreibbar und relativ zueinander verfahrbar sind. Auf diese Weise können etwa Nockenwellen, Kurbelwellen oder ähnliche Werkstücke mit exzentrischen Geometrien bearbeitet bzw. geschliffen werden.

Ein zu bearbeitendes Werkstück kann etwa zwischen zwei Spitzen einer Werkstückaufnahme oder aber einseitig in einer Werkstückaufnahme aufgenommen sein. Daneben ist das sogenannte spitzenlose Schleifen bekannt, bei dem das Werkstück in der Schleifmaschine nicht zwischen Spitzen aufgenommen ist, sondern etwa über Auflageschienen, Regelscheiben, Führungsrollen oder dergleichen aufgenommen und geführt werden kann.

Aus der DE 10 2009 042 252 A1 ist eine Schleifmaschine bekannt, die eine Messvorrichtung aufweist, die zur Inprozess-Messung an Prüflingen während eines Bearbeitungsvorganges ausgebildet ist. Zu diesem Zweck weist die Messvorrichtung einen Messkopf auf, der über ein Gestänge schwenkbar mit einem Grundkörper der Messvorrichtung verbunden ist. Der Messkopf weist einen auslenkbaren Messtaster auf, der mit einem Messprisma gekoppelt ist und zur Bestimmung des Durchmessers oder der Rundheit des Prüflings vorgesehen ist. Das Gestänge soll dazu ausgebildet sein, zumindest über einen bestimmten Bereich Bewegungen des Prüflings nachvollziehen zu können, beispielsweise eine Drehung eines Kurbelzapfens einer Kurbelwelle um deren Drehachse.

Auf diese Weise kann grundsätzlich, auch bei einer Schleifbearbeitung exzentrisch angeordneter Zylinderflächen zumindest abschnittsweise eine Inprozess-Messung erfolgen. Dies kann gleichzeitig mit der Schleifbearbeitung erfolgen. Jedoch weist die Messvorrichtung einen komplexen Aufbau auf. Das Gestänge ist aufwändig gestaltet und im Betrieb aufwändig zu steuern.

Die sogenannte Inprozess-Messung, also eine Messung während eines Bearbeitungsgangs, kann hochgenaue Bearbeitungsgänge erlauben und zur Erhöhung der Fertigungsqualität und Prozesssicherheit beitragen. Zu diesem Zweck ist es jedoch regelmäßig erforderlich, für jede zu messende Werkstückabmessung, also etwa für jeden Durchmesser, einen genau auf das zu erwartende Maß abgestimmten Messkopf bereitzustellen. Dies kann etwa ein Einzweck-Messkopf sein, oder aber ein Messkopf, an dem etwa zwei Messtaster einstellbar aufgenommen sind, die zueinander einen Abstand aufweisen, der dem erwarteten Abstand entspricht. Die Messtaster sind jeweils an das zu prüfende Maß hochgenau anzupassen und entsprechend auszurichten.

Ein solcher Inprozess-Messkopf ist etwa in der DE 196 16 353 A1 gezeigt. Nachteilig können dabei aufwändige Einricht-, Justier- bzw. Eichprozesse sein, die erforderlich sind, um den Messkopf für den jeweiligen Einsatzzweck anzupassen. Insbesondere bei der Einzelbearbeitung, bei Kleinserien und Mittelserien kann etwa das Einrichten des Messkopfes einen nicht vernachlässigbaren Zeitaufwand mit sich bringen.

Vor diesem Hintergrund muss bereits eingewandt werden, dass die aus der DE 10 2009 042 252 A1 bekannte Messvorrichtung unter Umständen nicht den bei einer Inprozess-Messung erforderlichen Messgenauigkeiten entsprechen kann. Der zugehörige Messkopf weist einen Messtaster und ein Messprisma auf, die über eine Mehrzahl von Gestängeelementen des Gestänges mit einem absoluten Maßbezug gekoppelt sind. In die Lage des Messkopfes relativ zum Prüfling können sämtliche Abweichungen entlang von Einzelelementen der kinematischen Kette des Gestänges eingehen. Das kann insbesondere bei der abschnittsweisen Vermessung von exzentrischen Werkstücken nachteilig sein. Die Lage des Messkopfes relativ zum Prüfling, etwa relativ zu dessen Winkellage, kann fehlerbehaftet sein.

Vor diesem Hintergrund liegt der Erfindung die Aufgabe zugrunde, eine Werkzeugmaschine, insbesondere eine Schleifmaschine, anzugeben, bei der bei geringem Aufwand eine hochgenaue und hochflexible Vermessung von Werkstücken gestattet ist. Ferner soll ein Verfahren zur Vermessung eines Werkstücks, insbesondere eines Werkstückdurchmessers, angegeben werden, das etwa mit einer solchen Werkzeugmaschine durchgeführt werden kann.

Diese Aufgabe wird erfindungsgemäß durch eine Werkzeugmaschine, insbesondere eine Schleifmaschine, gelöst, die Folgendes aufweist:
- eine Werkstückaufnahme mit zumindest einem Werkstückhalter zur Aufnahme eines Werkstücks,
- eine Werkzeugeinheit mit einer Werkzeugspindel, insbesondere mit einem Schleifkopf, zur Aufnahme und zum Antrieb eines Werkzeugs, insbesondere zumindest einer Schleifscheibe, wobei die Werkzeugeinheit zumindest entlang einer Zustelllachse relativ zum Werkstück verfahrbar ist,

- eine modulare Messeinrichtung, die an der Werkzeugeinheit aufgenommen ist, wobei die Messeinrichtung zumindest einen Schaltmesskopf aufweist, wobei der zumindest eine Schaltmesskopf an einem Trägerstück aufgenommen ist, das eine Mehrzahl von definierten Soll-Lagen für den zumindest einen Schaltmesskopf bereitstellt, und
- eine Steuereinrichtung, die mit der Messeinrichtung und der Werkzeugeinheit gekoppelt ist, wobei die Steuereinrichtung dazu ausgebildet ist, durch den zumindest einen Schaltmesskopf beim Antasten eines Werkstücks ausgelöste Signale zu erfassen und anhand einer Ist-Lage der Werkzeugeinheit eine Ist-Position des zumindest einen Schaltmesskopfes zu ermitteln.

Die Aufgabe der Erfindung wird auf diese Weise vollkommen gelöst.

Erfindungsgemäß kann nämlich mit einem geringen Zusatzaufwand eine stark erweiterte Funktionalität bereitgestellt werden. Durch einen Rückgriff der Steuereinrichtung auf Positionsdaten, die beim Verfahren der Werkzeugeinheit ohnehin erfasst werden bzw. ohne wesentlichen Zusatzaufwand erfasst werden können, kann die Ist-Position des zumindest einen Schaltmesskopfes hochgenau bestimmt werden. Beispielhaft kann anhand eines Auslösezeitpunktes des zumindest einen Schaltmesskopfes und der zugehörigen Ist-Lage der Werkzeugeinheit die Ist-Position des Schaltmesskopfes ermittelt werden. Die kann Rückschlüsse auf Werkstückgeometrien oder auf Werkstückabmessungen erlauben.

Das Trägerstück stellt eine Mehrzahl von Soll-Lagen für den zumindest einen Schaltmesskopf bereit. Auf diese Weise kann der zumindest eine Schaltmesskopf an verschiedenen Positionen befestigt werden. Dies kann dazu beitragen, verschiedene Messaufgaben erfüllen zu können. Die Messaufgaben können etwa ein radiales Antasten an das Werkstück umfassen. Die Messaufgaben können ferner ein axiales Antasten an das Werkstück umfassen. Der zumindest eine Schaltmesskopf kann derart am Trägerstück aufgenommen sein, dass etwa ein Tastarm in eine Vertiefung oder Ausnehmung am Werkstück eingeführt werden kann. Die kann grundsätzlich axial oder radial erfolgen. Die Vertiefung oder Ausnehmung kann etwa als Bohrung oder Nut ausgebildet sein. Eine Bohrung kann etwa als Axialbohrung oder Radialbohrung ausgeführt sein. Eine Nut kann etwa als Längsnut oder Umfangsnut ausgebildet sein. Verschiedene definierte Lagen und Orientierungen des zumindest einen Schaltmesskopfes erlauben eine genaue Bestimmung einer Vielzahl von Maßen.

Eine Mehrzahl definierter Soll-Lagen für den zumindest einen Schaltmesskopf kann ferner ein Antasten und Vermessen von Werkstücken erlauben, die hinsichtlich ihrer Abmessungsbereiche und Größenordnungen deutliche Unterschiede aufweisen. Auf diese Weise können etwa ohne wesentliche Umrüstarbeiten sowohl relativ "große" als auch relativ "kleine" Werkstücke vermessen werden. Auch die Erfassung verschiedener Lage- und Formtoleranzen ist denkbar. Vorzugsweise sind zwei Schaltmessköpfe am Trägerteil aufgenommen. Auf diese Weise kann das Werkstück mit noch höherer Flexibilität vermessen werden. Gemäß einer bevorzugten Ausgestaltung ist der zumindest eine Schaltmesskopf als Auslöseschalter (oder: Triggerschalter) ausgebildet. Mit anderen Worten kann der zumindest eine Schaltmesskopf etwa dazu ausgebildet sein, lediglich zwei Zustandssignale zu erzeugen. Dabei kann es sich um den Zustand "kein Kontakt" sowie um den Zustand "Kontakt" handeln. Auf diese Weise kann durch ein vom zumindest einen Schaltmesskopf erzeugtes "Kontakt"-Signal eine indirekte Positionsbestimmung des Schaltmesskopfes unter Beachtung der Ist-Lage der Werkzeugeinheit erfolgen. Es können Informationen etwa eine Werkstückgeometrie gewonnen werden. Die Ist-Position des zumindest einen Schaltmesskopfes kann grundsätzlich absolut oder relativ erfasst werden.

Insbesondere dann, wenn die Werkzeugeinheit mehr als eine verfahrbare Achsen zu deren Verlagerung aufweist, kann die Ist-Position des zumindest einen Schaltmesskopfes in mehreren Richtungen oder Raumachsen erfasst werden. Die Werkzeugeinheit ist zumindest entlang einer Zustellachse relativ zum Werkstück verlagerbar. Demgemäß kann die (absolute oder relative) Ist-Position des zumindest einen Schaltmesskopfes auf dieser Achse erfasst werden. Wenn die Werkzeugeinheit darüber hinaus entlang zumindest einer weiteren Achse relativ zum Werkstück verfahrbar ist, kann die Bestimmung der Ist-Position anhand einer entsprechenden Mehrzahl von Raumachsen erfolgen. Eine solche Bewegung kann etwa eine Vorschubbewegung umfassen. Beispielhaft kann eine zweidimensionale oder dreidimensionale Positionsbestimmung des zumindest einen Schaltmesskopfes erzielt werden. Es versteht sich, dass die Werkzeugeinheit direkt oder indirekt verfahren werden kann. Allgemein kann eine Relativbewegung zwischen der Werkzeugeinheit und dem Werkstück umfasst sein. Mit anderen Worten kann also etwa auch eine Bewegung des Werkstücks gegenüber der Werkzeugeinheit eine Relativbewegung zwischen der Werkzeugeinheit und dem Werkzeug darstellen. Auch bei dieser Bewegung erfassbare Ist-Lagen der Werkzeugeinheit können zur Bestimmung der Ist-Position des zumindest einen Schaltmesskopfes genutzt werden. Ferner kann die Werkzeugeinheit auch mittelbar verfahren werden. Dies kann etwa über einen Kreuztisch erfolgen, der eine Bewegung in zwei Raumrichtungen ermöglicht.

Es ist grundsätzlich vorstellbar, anhand von Referenzobjekten eine relative oder absolute Kalibrierung der modularen Messeinrichtung vorzunehmen. Die Kalibrierung kann sich insbesondere auf den zumindest einen Schaltmesskopf beziehen. Referenzobjekte können etwa als fixe oder lösbare Referenzgeometrien an der Werkzeugmaschine vorgesehen sein. Durch Antasten eines Referenzobjekts mit bekannter Lage und/oder bekannter Geometrie kann die Kalibrierung erfolgen. Eine absolute Kalibrierung kann eine genaue Bestimmung der Ist-Position des zumindest einen Schaltmesskopfes in Relation zur Ist-Lage der Werkzeugeinheit umfassen. Auf diese Weise können etwa einzelne Punkte absolut erfasst werden. Eine relative Kalibrierung kann etwa das Antasten zweier definierte Punkte an einem Referenzobjekt umfassen. Etwa dann, wenn ein Abstand zwischen diesen Punkten vorbekannt ist, kann eine relative Kalibrierung erfolgen, ohne die jeweiligen Absolutlagen des zumindest einen Schaltmesskopfes erfassen zu müssen.

In bevorzugter Weiterbildung weist die modulare Messeinrichtung zumindest zwei Schaltmessköpfe auf, die zueinander beabstandet am Trägerstück aufgenommen sind, wobei die zumindest zwei Schaltmessköpfe in einer ersten Messkonfiguration einen Basisabstand voneinander aufweisen, der einen Messbereich definiert, wobei der Basisabstand größer als ein bekanntes Referenzmaß gewählt ist, und wobei die Steuereinrichtung dazu ausgebildet ist, eine Ist-Lage der Werkzeugeinheit entlang der Zustellachse zu erfassen, und auf Basis eines Verfahrweges der Werkzeugeinheit beim Antasten eines Werkstücks, das in den Messbereich eingebracht ist, mit den zumindest zwei Schaltmessköpfen unter Berücksichtigung des Referenzmaßes und/oder des Basisabstands einen Ist-Abstand, insbesondere einen Ist-Durchmesser, zu ermitteln. Insbesondere können die zumindest zwei Schaltmessköpfe in einer Richtung parallel und/oder fluchtend zur Zustellachse beabstandet sein. Der Basisabstand kann etwa zwischen zwei Tastarmen der Schaltmessköpfe und/oder deren Tastkugeln oder vergleichbaren Kontaktelementen bestimmt werden. Die zumindest zwei Schaltmessköpfe können Bestandteil eines Messaufsatzes sein.

Gemäß dieser Weiterbildung weist der Messaufsatz im Vergleich zum erwarteten Maß des zu vermessenden Werkstücks ein "Übermaß" auf, das beim Messen jedoch kompensiert werden kann. Etwa beim Messen eines Durchmessers des Werkstücks wird zunächst ein erster Schaltmesskopf der zumindest zwei Schaltmessköpfe durch eine Bewegung der Werkzeugeinheit, an der die Messeinrichtung aufgenommen ist, entlang der Zustellachse verfahren, bis eine Messung erfolgen kann. Anschließend wird das Werkstück etwa auf der gegenüberliegenden Seite durch einen zweiten Schaltmesskopf der zumindest zwei Schaltmessköpfe angetastet, indem die Werkzeugeinheit entsprechend entlang der Zustellachse verfahren wird.

Bei dieser doppelten Antastung kann der Verfahrweg der Werkzeugeinheit bestimmt werden. Ausgehend von dem Basisabstand, der unter Verwendung des bekannten Referenzmaßes ermittelt ist, kann in einfacher Weise der Ist-Abstand ermittelt werden. Auf diese Weise ist die Werkzeugmaschine in besonders vorteilhafter Art dazu ausgebildet, eine Messung durchzuführen, die Elemente einer absoluten Messung und einer relativen Messung kombinieren kann. Maschinenseitige Ungenauigkeiten, etwa Verformungen aufgrund von Erwärmung im Betrieb oder Ähnliches, können regelmäßig nur über den Relativabstand der zwei absoluten Ist-Lagen der Werkzeugeinheit entlang der Zustellachse beim Antasten in das Messergebnis eingehen. Die Messung kann fehlerarm erfolgen.

Auf den Messaufsatz selbst, insbesondere den Basisabstand zwischen den zumindest zwei Schaltmessköpfen, können maschinenseitige Einflussfaktoren nicht in nennenswerter Weise einwirken. Im Vergleich zur Inprozess-Messung, bei der der Messaufsatz hochgenau auf das erwartete Maß eingestellt werden muss, ist eine deutlich erhöhte Flexibilität gegeben. Auf diese Weise kann etwa auch bei Einzelfertigungen, Kleinserien oder mittleren Serien bei geringem Aufwand eine hohe Fertigungsqualität gewährleistet werden. Insbesondere bei derartigen Anwendungen ist die zur Messung erforderliche Zeit, in der etwa kein Eingriff der Schleifscheibe erfolgen kann, nicht von hoher Bedeutung. Es versteht sich, dass die Fähigkeit zur Erfassung der Ist-Lagen zur Ermittlung des Verfahrweges genutzt werden kann. Der Verfahrweg kann dem Abstand zweier Ist-Lagen der Werkzeugeinheit entlang der Zustellachse beim Antasten entsprechen. Die Ist-Lagen können absolut oder relativ erfasst werden.

Bekannte Absolutmessköpfe weisen im Regelfall zumindest zwei komplexe Messzellen auf, denen jeweils ein Taster zugeordnet ist. Bauartbedingt sind die Taster beweglich angeordnet und beispielsweise scherenförmig oder aber als aufeinander zu bewegbare, im Wesentlichen parallel zueinander angeordnete Schenkel ausgeführt. Somit sind Absolutmessköpfe im Regelfall sehr aufwändig gestaltet. Gewicht und Einbaugröße sind beträchtlich. Aufgrund hoher Investitionskosten scheiden Absolutmessköpfe als Messmittel für eine Vielzahl von Anwendungen aus. Der komplexe Aufbau eines Absolutmesskopfs, bei dem die Messtaster zueinander beweglich angeordnet sind, geht häufig mit Verringerung der Messgenauigkeit einher. Derartige Messköpfe können aufgrund ihres komplexen Aufbaus nur mit hohen Kosten realisiert werden.

Demgegenüber führt die Kombination des Messaufsatzes mit den zumindest zwei Schaltmessköpfen, die in der ersten Messkonfiguration einen fixen Basisabstand zueinander aufweisen, mit der - ohnehin vorgesehenen - verfahrbaren Werkzeugeinheit bei deutlich geringerem baulichen Aufwand und Kostenaufwand zu höheren Messgenauigkeiten. Wie eingangs erwähnt, kann eine maschinenseitige Abweichung, etwa der sogenannte thermische Gang, nur über einen geringen Relativwert, nämlich die Differenz zwischen zwei Ist-Lagen der Werkzeugeinheit, auf das Messergebnis Einfluss nehmen. Ein Eichen der Messeinrichtung anhand des bekannten Referenzmaßes kann dazu führen, dass ein großer Anteil des Basisabstands gewissenmaßen fehlerfrei oder fehlerarm in dessen Ermittlung eingeht.

Bei bekannten Inprozess-Messköpfen muss etwa dann, wenn eine Mehrzahl von Durchmessern am gleichen Werkstück in einer Aufspannung zu schleifen sind, für jeden dieser Durchmesser eigene Messmittel, etwa jeweils ein eigener Messkopf, bereitgehalten werden. Der Messaufsatz mit "Übermaß" kann es erlauben, jeden dieser Durchmesser bei der Fertigung abzuprüfen, ohne dass das Werkstück ausgespannt werden muss. Auch in diesem Zusammenhang kann sich ein deutlich verringerter Investitionsaufwand und Bauraumaufwand bei nahezu gleichen Genauigkeiten ergeben.

Es versteht sich, dass der Begriff "Einbringen" relativ verstanden werden kann. Ein Einbringen des Werkstücks in den Messbereich zwischen den zumindest zwei Schaltmessköpfen der Messeinrichtung kann etwa auch dadurch erfolgen, dass die Schaltmessköpfe zum Werkstück hin bewegt werden. Die zumindest zwei Schaltmessköpfe können etwa als taktile Schaltmessköpfe oder aber als berührungslos messende Schaltmessköpfe ausgebildet sein.

In bevorzugter Weiterbildung ist zumindest ein Schaltmesskopf an einem Adapterstück aufgenommen, das auf das Trägerstück abgestimmt ist und in einer Mehrzahl von definierten Soll-Lagen am Trägerstück befestigbar ist. Etwa dann, wenn zwei Schaltmessköpfe vorgesehen sind, kann jedem Schaltmesskopf ein Adapterstück zugeordnet sein. Die Adapterstücke können mittelbar oder unmittelbar am Trägerstück aufgenommen sein. Eine mittelbare Befestigung kann unter Einbeziehung weiterer zwischenliegender Teile erfolgen. Beispielhaft kann das Trägerstück eine definierte Befestigungsgeometrie für zumindest ein Adapterstück, vorzugsweise zwei Adapterstücke aufweisen. Die Befestigungsgeometrie kann etwa Passflächen und/oder ein definiertes Lochbild für Befestigungselemente aufweisen. Es versteht sich, dass an dem zumindest einen Adapterstück eine zumindest teilweise mit der Befestigungsgeometrie korrespondierende Passgeometrie vorgesehen sein kann. Das zumindest eine Adapterstück kann etwa lösbar mit dem Trägerstück verbunden sein. Hierzu eignen sich etwa Schraubverbindungen, Klemmverbindungen oder Ähnliches. Die Verbindung kann ferner auch Passelemente, etwa Passstifte aufweisen. Passelemente können eine hochgenaue Lagezuordnung ermöglichen. Es versteht sich ebenso, dass der zumindest eine Schaltmesskopf mittelbar oder unmittelbar am jeweiligen Trägerstück aufgenommen sein kann. Eine mittelbare Aufnahme kann etwa unter Einbeziehung eines Passstückes erfolgen. Die Adapterstücke können grundsätzlich gleichartig gestaltet sein. Es jedoch auch denkbar, verschiedenartig gestaltete Adapterstücke zu verwenden. Dabei kann es sich etwa um ein erstes Adapterstück sowie ein zweites Adapterstück handeln, wobei das zweite Adapterstück vom ersten Adapterstück verschieden ist.

Gemäß einer weiteren Ausgestaltung sind die zumindest zwei Schaltmessköpfe in einer zweiten Messkonfiguration derart in einer Raumrichtung voneinander beabstandet am Trägerstück aufgenommen, dass ein Schaltmesskopf das Werkstück axial antasten kann. Dies kann etwa ein einer Z-Richtung erfolgen, die parallel zu einer Werkstückspindelachse verläuft. Die Z-Richtung kann etwa mit einer Werkstückachse korrespondieren. Auf diese Weise kann das Werkstück mit einem Schaltmesskopf axial angefahren und angetastet werden, ohne dass der andere (axial versetzte) Schaltmesskopf das Werkstück axial kontaktiert. Axiale Antastungen können etwa zur Bestimmung axialer Abmessungen des Werkstücks erfolgen. Ferner kann mittels einer Mehrzahl axialer Antastungen etwa eine Planheit (auch: Ebenheit) einer Axialfläche des Werkstücks bestimmt werden.

Gemäß einer weiteren Ausgestaltung weist zumindest ein Schaltmesskopf einen gekrümmten Tastarm auf, der unter einem Winkel zu einer Längsachse des Schaltmesskopfes ausläuft. Somit kann der zumindest eine Schaltmesskopf bzw. dessen Tastarm in Ausnehmungen und Vertiefungen am Werkstück eindringen. Ferner kann mittels eines gekrümmten Tastarms etwa ein Abstand zwischen zwei Schaltmessköpfen variiert werden. Es versteht sich, dass etwa dann, wenn zwei oder mehr Schaltmessköpfe verwendet werden, lediglich einer davon oder aber eine Mehrzahl von Schaltmessköpfen mit einem gekrümmten Tastarm versehen sein kein. Tastarme von Schaltmessköpfen können regelmäßig ohne großen Aufwand ausgewechselt werden. Somit kann durch Nutzung verschiedener Tastarmgeometrien die Flexibilität der Messeinrichtung weiter erhöht werden. Unter einen "gekrümmten" Tastarm kann ein Tastarm verstanden werden, der verschiedene Geometrien umfassen kann. Ein "gerader" Tastarm ist regelmäßig als stiftförmiger oder stabförmiger Rotationskörper ausgebildet, dessen Achse mit der Längsachse des Schaltmesskopfes zusammenfällt. Die Längsachse des Schaltmesskopfes kann einer Haupterstreckungsrichtung des Schaltmesskopfes entsprechen. Ein gekrümmter Tastarm kann demgegenüber gebogen und/oder abgewinkelt sein. Ein gekrümmter Tastarm kann grundsätzlich auch eine Kröpfung aufweisen.

Gemäß einer weiteren Ausgestaltung weist die Messeinrichtung einen Messaufsatz auf, an dem die zumindest zwei Schaltmessköpfe aufgenommen sind, wobei der Messaufsatz verschwenkbar ist, um das Werkstück in den Messbereich einzubringen. Auf diese Weise kann der Messaufsatz über eine einfache Schwenkbewegung in Richtung auf das Werkstück bewegt werden, um die Antastungen durchführen zu können. Dies kann etwa durch einen Linearantrieb erfolgen, beispielsweise einen Hydraulikzylinder. Durch die Verschwenkbarkeit können Kollisionen vermieden werden, die beispielsweise beim Verfahren der Werkzeugeinheit bei einer Schleifbearbeitung auftreten können.

Abgesehen von einer solchen Schwenkvorrichtung sind für die Messeinrichtung regelmäßig keine weiteren separaten Antriebseinrichtungen erforderlich. Der Messaufsatz kann etwa U-förmig gestaltet sein. Der erste und der zweite Schaltmesskopf können dabei die Schenkel des U bilden. Der Innenraum des U kann den Messbereich bestimmen.

Gemäß einem weiteren Aspekt weist die Messeinrichtung einen Koppelgetriebemechanismus auf, der ein Verschwenken zwischen einer Messstellung und einer Außer-Eingriff-Stellung erlaubt.

Ein Koppelgetriebemechanismus kann besonders platzsparend ausgebildet sein. Durch den Koppelgetriebemechanismus können zwei Endlagen definiert sein, nämlich etwa die Messstellung und die Außer-Eingriff-Stellung. Insbesondere die Messstellung kann durch konstruktive Maßnahmen, wie etwa Anschläge oder dergleichen, mit hoher Reproduzierbarkeit verwirklicht werden.

Wenn die Messstellung und die Außer-Eingriff-Stellung etwa durch mechanische Gestaltungen am Koppelgetriebemechanismus definiert sind, kann zum Antrieb der Messeinrichtung ein einfaches Antriebselement bzw. Stellelement gewählt werden. Aufwändige Steuereinrichtungen für den Koppelgetriebemechanismus können auf diese Weise vermieden werden. Anstatt eines Koppelgetriebemechanismus können alternativ etwa Drehgelenke mit definiertem Schwenkbereich oder etwa mit steuerbaren Motoren gekoppelte Schwenkarme vorgesehen sein. Es kann von Vorteil sein, wenn die Motoren eine hohe Positioniergenauigkeit aufweisen.

Gemäß einer weiteren Ausgestaltung weisen der Basisabstand und der Ist-Abstand ein Verhältnis von ungefähr maximal 2:1, vorzugsweise maximal 1,5:1, weiter bevorzugt maximal 1,2:1, noch weiter bevorzugt maximal 1,1:1 auf. Je kleiner das Verhältnis zwischen dem Basisabstand und dem Ist-Abstand ist, desto geringer werden maschinenseitige Einflüsse bei der Ermittlung des Ist-Abstands.

Demgegenüber kann sich bei einem großen Verhältnis zwischen dem Basisabstand und dem Ist-Abstand eine höhere Flexibilität der Messeinrichtung ergeben. Der Messaufsatz kann für eine Vielzahl von Ist-Abständen, insbesondere Ist-Durchmessern, geeignet sein. Maschinenseitige Einflüsse kommen im Wesentlichen nur über den Verfahrweg, der etwa der Differenz zwischen dem Basisabstand und dem Ist-Abstand entspricht, zum Tragen.

Der Basisabstand kann durch Verfahren der Werkzeugeinheit entlang der Zustellachse und beidseitiges Antasten des in der Werkzeugaufnahme aufgenommenen Referenzmaßes unter Berücksichtigung des Verfahrweges der Werkzeugeinheit ermittelt werden. Bei einem geringen Verhältnis zwischen dem Basisabstand und dem Referenzabstand kann eine hohe Genauigkeit bei der Ermittlung des Basisabstands gewährleistet werden. Höchste Genauigkeiten können erzielt werden, wenn das Referenzmaß nahezu dem Basisabstand entspricht, also nur unwesentlich kleiner ist.

Gemäß einer weiteren Ausgestaltung ist zumindest ein Schaltmesskopf der zumindest zwei Schaltmessköpfe in einem Proportionalitätsbereich auslenkbar, wobei die Steuereinrichtung dazu ausgebildet ist, die Auslenkung des zumindest einen Schaltmesskopfes zu erfassen. Zu diesem Zweck kann der zumindest eine Schaltmesskopf mit einem Wegaufnehmer zur Erfassung der Auslenkung versehen sein. Wegaufnehmer können etwa als induktive Wegaufnehmer, kapazitive Wegaufnehmer oder als Potentiometergeber ausgebildet sein. Andere Prinzipien zur Erfassung der Auslenkung sind denkbar. Eine Erfassung der Auslenkung kann etwa auch über Dehnmessstreifen erfolgen. Es könnten auch Piezoelemente zur Anwendung kommen. Auslenkbare Messtaster erlauben regelmäßig zumindest im Proportionalitätsbereich eine hochgenaue Lageerfassung. Die Auslenkung des zumindest einen Schaltmesskopfes kann bei der Ermittlung des Ist-Abstands berücksichtigt werden. Auf diese Weise können etwa absolute Maschineneinflüsse beim Verfahren der Werkzeugeinheit zum Antasten des Werkzeugs erkannt und ausgeglichen werden. In Kenntnis der Auslenkung des zumindest einen Schaltmesskopfes kann der Verfahrweg der Werkzeugeinheit korrigiert werden.

Demgegenüber kann es gemäß verschiedener bevorzugter Ausgestaltungen gerade bevorzugt sein, Schaltmessköpfe zu verwenden, die lediglich dazu ausgebildet sein, ein Auslösesignal (auch: Triggersignal) auszugeben. Mit anderen Worten können die Schaltmessköpfe etwa zwei Zustände aufweisen ("Kontakt" oder "kein Kontakt"), jedoch keine Zwischenzustände ausgeben. Derartige Schaltmessköpfe können grundsätzlich auch auslenkbar gestaltet sein. Über eine minimale Auslenkung eines Tastarms kann etwa eine Antastung detektiert werden. Eine solche Auslenkung kann etwa den Zustand eines Schaltkreises des Schaltmesskopfes ändern (öffnen oder schließen). Derartige Schaltmessköpfe sind kostengünstiger als Messköpfe, die aufwändige interne Wegerfassungssysteme aufweisen.

Gemäß einer Weiterbildung ist das Werkstück an einer Werkstückspindel aufnehmbar, die selektiv um eine Werkstückspindelachse rotatorisch antreibbar ist, wobei die Werkstückspindelachse vorzugsweise senkrecht zur Zustellachse angeordnet ist, und wobei die Werkzeugspindel vorzugsweise eine Werkzeugspindelachse aufweist, die parallel zur Werkstückspindelachse angeordnet ist. Eine solchermaßen gestaltete Werkstückspindel kann etwa auch als C-Achse bezeichnet werden. Eine steuerbare C-Achse kann eine gezielte Messung von Ist-Abständen an verschiedenen Stellen entlang des Werkstückumfangs erlauben. Durch mehrmaliges Antasten des Werkstücks mit dem zumindest einen Schaltmesskopf kann sich der Anwendungsbereich der Messeinrichtung erweitern. Insbesondere in Kombination mit der selektiv um ihre Werkstückspindelachse antreibbaren Werkstückspindel, also der C-Achse, können etwa Unrundheiten des Werkstücks erfasst werden. Auf diese Weise können etwa auch Formtoleranzen überprüft werden.

Gemäß einer Weiterbildung ist die Werkzeugeinheit parallel zur Werkstückspindelachse relativ zum Werkstück verfahrbar. Auf diese Weise können an einer Vielzahl verschiedener Axialpositionen des aufgenommenen Werkstücks Ist-Abstände ermittelt werden. Ein axiales Verfahren der Werkzeugeinheit erlaubt ferner ein axiales Antasten des Werkstücks durch den zumindest einen Schaltmesskopf. Neben der Bestimmung radialer Maße oder Abstände können somit auch axiale Geometrieelemente oder Abstände erfasst werden.

Gemäß einem weiteren Aspekt ist die Steuereinrichtung dazu ausgebildet, bei einer gekoppelten Bewegung die Werkzeugeinheit selektiv entlang der Zustellachse zu verfahren und die Werkstückspindel selektiv um die Werkstückspindelachse anzutreiben. Eine derartige gekoppelte Bewegung erlaubt die Erfassung exzentrischer Geometrien, beispielsweise von Hubzapfen einer Kurbelwelle oder Nockenflächen einer Nockenwelle, oder weiteren Unrundheiten. Es ist vorstellbar, durch beidseitiges Antasten mit beiden Schaltmessköpfen entlang bestimmter Stellungen des umlaufenden exzentrischen Werkstücks die jeweiligen Ist-Abstände zu erfassen. Zusätzlich oder alternativ dazu können etwa durch mehrmaliges Antasten darüber hinausgehend Oberflächenungenauigkeiten erfasst werden, wenn die Werkzeugeinheit derart bewegt wird, dass der Schaltmesskopf mehrmals beim Umlauf des Werkstücks an diesem zur Anlage gelangt. Mit Hilfe der vorgenannten Funktionalität können etwa auch Längsnuten oder ähnliche Geometrieelemente erfasst werden, die sich im Wesentlichen axial am Werkstück erstrecken. Es kann sich dabei ferner etwa um Keilwellenprofile, Zahnprofile, Polygonprofile oder dergleichen Handeln.

Gemäß einem weiteren Aspekt ist die Steuereinrichtung dazu ausgebildet, bei einer gekoppelten Bewegung ferner die Werkzeugeinheit selektiv parallel zur Werkstückspindelachse zu verfahren. Somit können etwa neben Rundheitstoleranzen, die etwa auf eine Axialposition des Werkstücks beschränkt sind, auch Zylinderformabweichungen ermittelt werden. Zu diesem Zweck kann die Werkzeugeinheit mit der Messeinrichtung bei der Messung axial entlang des Werkstücks verfahren werden. Das Antasten kann beispielsweise entlang einer Spiralbahn auf dem Werkstück erfolgen.

Die Werkzeugeinheit kann etwa einen Kreuztisch umfassen oder auf einem Kreuztisch aufgenommen sein, der Führungen für die Zustellachse und die Bewegung relativ (beispielsweise parallel) zur Werkstückspindelachse bereitstellt. Es versteht sich jedoch, dass die Werkzeugeinheit auch anders gestaltet bzw. geführt sein kann. Grundsätzlich könnte etwa auf einen Kreuztisch mit zwei Führungen verzichtet werden. Die Werkzeugeinheit könnte etwa an einer Führung für die Zustellachse aufgenommen sein. Eine Bewegung der Werkzeugeinheit parallel zur Werkstückspindelachse kann dabei grundsätzlich auch durch eine Bewegung des aufgenommenen Werkstücks relativ zur Werkzeugeinheit bewirkt werden. Weitere Gestaltungen sind denkbar.

Gemäß einem weiteren Aspekt ist die Steuereinrichtung dazu ausgebildet, die Werkzeugeinheit mit der Messeinrichtung selektiv in einem Schnellgang oder einem Tastgang zu verfahren. Auf diese Weise kann ein Optimum zwischen Zeitersparnis durch Erhöhung der Verfahrgeschwindigkeit und Betriebssicherheit gewahrt werden. Im Tastgang, etwa einem Kriechgang, kann die Werkzeugeinheit abrupt abgestoppt werden. Dies kann etwa auch dann noch erfolgen, wenn der Messaufsatz signalisiert, dass zumindest einer der zumindest zwei Schaltmessköpfe das Werkstück mit einer bestimmten Antastkraft antastet. Zustellbewegungen, bei denen keine Kollisionen zu befürchten sind, können dagegen mit hohen Beschleunigungen bzw. Geschwindigkeiten erfolgen.

Gemäß einer weiteren Ausgestaltung ist die Steuereinrichtung dazu ausgebildet, anhand des Ist-Abstands des Werkstücks, insbesondere des Ist-Durchmessers, die Werkzeugeinheit und das Werkzeug in einem nachgelagerten Bearbeitungsgang selektiv anzutreiben und zu verlagern. Auf diese Weise kann etwa im Laufe der Vermessung des Werkstücks ein Korrekturwert ermittelt werden, der einer nachgelagerten Bearbeitung zugrunde zu legen ist. Auf diese Weise kann das Werkstück etwa Stück für Stück mittels wechselseitigem Vermessen und Korrigieren sicher auf die erforderlichen Endabmessungen gebracht werden. Auf Basis des Korrekturwertes kann die Steuereinrichtung die Werkzeugeinheit zielgerichtet zustellen und das Werkzeug definiert antreiben.

Gemäß einem weiteren Aspekt ist die Steuereinrichtung mit einem Positionsgeber der Werkzeugeinheit gekoppelt, an dem die Ist-Lage der Werkzeugeinheit erfasst werden kann. Der Positionsgeber kann etwa mit einer inkrementellen oder absoluten Maßverkörperung gekoppelt sein, die eine hochgenaue Erfassung der Ist-Lage der Werkzeugeinheit auf der Zustellachse erlaubt. Der Vergleich verschiedener Ist-Lagen der Werkzeugeinheit erlaubt eine hochgenaue Bestimmung des Verfahrweges.

Die Aufgabe der Erfindung wird ferner gelöst durch ein Verfahren zur Vermessung eines Werkstücks in einer Werkzeugmaschine, insbesondere einer Schleifmaschine, mit den folgenden Schritten:
- Bereitstellen einer modularen Messeinrichtung, die zumindest entlang einer Zustellachse relativ zu einem Werkstück verfahrbar ist, das an einer Werkstückaufnahme aufgenommen ist, wobei die Messeinrichtung an einer Werkzeugeinheit mit einer Werkzeugspindel aufgenommen ist, wobei die Messeinrichtung zumindest einen Schaltmesskopf aufweist, der an einem Trägerstück aufgenommen ist, das eine Mehrzahl von definierten Soll-Lagen für den zumindest einen Schaltmesskopf bereitstellt,
- Verfahren der Werkzeugeinheit relativ zum Werkstück,
- Erfassen von Signalen, die durch den zumindest einen Schaltmesskopf beim Antasten eines Werkstücks ausgelöst werden, und
- Ermitteln einer Ist-Position des zumindest einen Schaltmesskopfes anhand einer Ist-Lage der Werkzeugeinheit.

Auf diese Weise kann in einfacher Weise ohne wesentlichen Zusatzaufwand eine deutlich erweiterte Funktionalität bereitgestellt werden. Eine Vielzahl verschiedener Messaufgaben kann durchgeführt werden. Es können absolute und/oder relative Messungen erfolgen.

Das Verfahren kann durch die folgenden Schritte weitergebildet sein:

- Bereitstellen einer modularen Messeinrichtung, die zumindest zwei Schaltmessköpfe aufweist, die zueinander beabstandet an einem Trägerstück aufgenommen sind, das das eine Mehrzahl von definierten Soll-Lagen für die zumindest zwei Schaltmessköpfe bereitstellt,
- Vorbereitung einer Messung, umfassend:
   - Einstellen eines Basisabstands zwischen den zumindest zwei Schaltmessköpfen, der größer als ein bekanntes Referenzmaß einer Referenzgeometrie gewählt ist und einen Messbereich definiert,
   - Aufnahme der Referenzgeometrie in der Werkzeugmaschine,
   - Einbringen des Referenzmaßes in den Messbereich,
   - Verfahren der Messeinrichtung relativ zur Referenzgeometrie und Antasten des Referenzmaßes mit den Schaltmessköpfen, dabei Erfassung der Ist-Lagen der Messeinrichtung, somit Erfassung des Verfahrweges der Messeinrichtung, und
   - Ermitteln des Basisabstands unter Berücksichtigung des Referenzmaßes und der Ist-Lagen der Messeinrichtung beim Antasten,
- Durchführung zumindest einer Messung, insbesondere zur Bestimmung eines Werkstückdurchmessers, umfassend:
   - Aufnahme eines Werkstücks in der Werkzeugmaschine, Einbringen einer Messgeometrie des Werkstücks in den Messbereich,
   - Antasten der Messgeometrie des Werkstücks mit den Schaltmessköpfen, dabei Erfassung des Verfahrweges der Messeinrichtung, und
   - Ermitteln eines Ist-Abstands der Messgeometrie unter Berücksichtigung des Basisabstands und des Verfahrweges der Messeinrichtung beim Antasten.

Auch hierbei versteht sich, dass der Schritt des Einbringens durch eine Relativbewegung zwischen dem Referenzmaß der Referenzgeometrie und der Messeinrichtung erfolgen kann. Mit dem Verfahren kann in einfacher Weise ein Eichen oder Kalibrieren der Messeinrichtung durchgeführt werden. Hiernach ist die Messeinrichtung mit den zumindest zwei Schaltmessköpfen zur Vermessung einer Vielzahl von Werkstückgeometrien geeignet, sofern diese in den Messbereich einführbar sind.

Nach einmaligem Abgleich der Messeinrichtung anhand eines bekannten Referenzmaßes kann die Messeinrichtung für eine Vielzahl von Messvorgängen genutzt werden. Das Messen kann etwa in einen Fertigungsablauf eingebunden sein, der beispielsweise bei einem einmal eingespannten Werkstück eine Grobbearbeitung, eine Feinbearbeitung und eine Finish-Bearbeitung umfasst.

Es versteht sich, dass die Ist-Lagen der Messeinrichtung, die zur Ermittlung des Verfahrweges der Messeinrichtung herangezogen werden können, etwa als Absolutlagen oder aber als Relativlagen in Bezug auf eine Maßverkörperung verstanden werden können. Bei der Ermittlung des Ist-Abstands kann der Verfahrweg der Messeinrichtung relativ oder absolut ermittelt werden.

Das Verfahren kann insbesondere mit einer Werkzeugmaschine nach einem der vorgenannten Aspekte durchgeführt werden. Es versteht sich, dass auch das Verfahren gemäß einem oder mehreren Aspekten der vorgenannten Werkzeugmaschine weitergebildet sein kann.

Die Aufgabe der Erfindung wird ferner gelöst durch ein Maschinensteuerungsprogramm, das Programmcode aufweist, der dazu ausgebildet ist, eine Steuereinrichtung zu veranlassen, die Schritte des Verfahrens nach einem der vorgenannten Aspekte auszuführen, wenn das Maschinensteuerungsprogramm auf der Steuereinrichtung ausgeführt wird.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine Draufsicht einer Werkzeugmaschine;
- Fig. 2: eine perspektivische Teilansicht einer Werkzeugmaschine in Anlehnung an Fig. 1;
- Fig. 3a, 3b: Seitenansichten einer Messeinrichtung zur Verwendung bei der Werkzeugmaschine gemäß Fig. 2 in einer Außer-Eingriff-Stellung und einer Messstellung;
- Fig. 4: eine vereinfachte schematische Ansicht eines Messaufsatzes und eines Referenzwerkstücks;
- Fig. 5a, 5b: verschiedene Lagen des Messaufsatzes gemäß Fig. 4 beim Antasten eines Werkstücks;
- Fig. 6a, 6b: verschiedene Lagen des Messaufsatzes gemäß Fig. 4 beim Antasten eines Werkstücks mit einer gegenüber der Beschreibung gemäß Fig. 5a, 5b abgewandelten Ansteuerung;
- Fig. 7: eine Ansicht des Messaufsatzes gemäß Fig. 4 beim Erfassen von Formtoleranzen eines Werkstücks;
- Fig. 8: eine Ansicht des Messaufsatzes gemäß Fig. 4 beim Antasten eines Werkstücks, das exzentrisch umläuft;
- Fig. 9: eine perspektivische Ansicht einer weiteren Messeinrichtung, die etwa mit der Werkzeugmaschine gemäß Fig. 2 kombinierbar ist, die Messeinrichtung befindet sich in einer ersten Modulkonfiguration;
- Fig. 10a, 10b: perspektivische Teilansichten der Messeinrichtung gemäß Fig. 9 in einer zweiten Modulkonfiguration und einer dritten Modulkonfiguration;
- Fig. 11: eine perspektivische Explosionsansicht eines Modulbausatzes, der ein Trägerstück und ein erstes Adapterstück sowie ein zweites Adapterstück aufweist;
- Fig. 12: eine seitliche Explosionsansicht des Modulbausatzes gemäß Fig. 11;
- Fig. 13: eine stark vereinfachte schematische perspektivische Ansicht eines Werkstücks und eines Messaufsatzes zur Veranschaulichung einer Messaufgabe;
- Fig. 14a, 14b: stark vereinfachte schematische frontale Ansichten eines weiteren Werkstücks und eines Messaufsatzes zur Veranschaulichung einer weiteren Messaufgabe;
- Fig. 15: eine stark vereinfachte schematische perspektivische Ansicht noch eines weiteren Werkstücks und eines Messaufsatzes zur Veranschaulichung noch einer weiteren Messaufgabe; und
- Fig. 16: schematische Flussdiagramme eines Verfahrens zum Eichen einer Messeinrichtung und eines Verfahrens zur Vermessung eines Werkstücks.

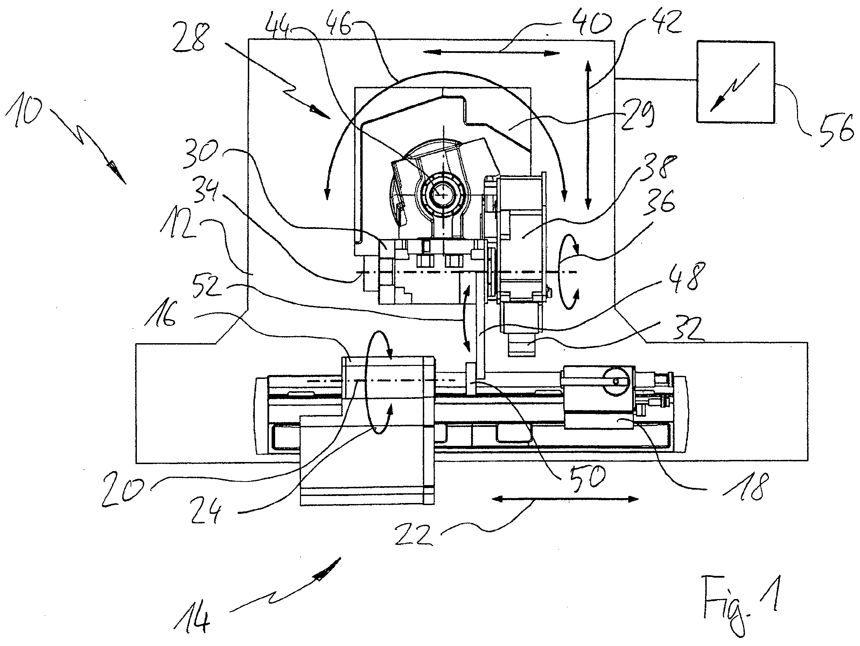

In Fig. 1 ist eine Werkzeugmaschine dargestellt und insgesamt mit 10 bezeichnet. Die Werkzeugmaschine 10 ist vorliegend als Schleifmaschine ausgebildet. Es versteht sich, dass die nachfolgenden Abbildungen nicht unbedingt maßstabsgerecht ausgeführt sein müssen. Vielmehr kann etwa aus Veranschaulichungsgründen von einem einheitlichen Maßstab abgewichen werden. Dies kann etwa bei einem Vergleich verschiedener Figuren miteinander, aber auch bei Darstellungen innerhalb einer einzelnen Figur der Fall sein. Die Werkzeugmaschine 10 weist einen Maschinentisch 12 auf, der etwa als Teil eines Gestells ausgebildet sein kann. Auf dem Maschinentisch 12 ist eine Werkstückaufnahme 14 aufgenommen und geführt. Die Werkstückaufnahme 14 weist einen Werkstückspindelstock auf, der mit einer Werkstückspindel 16 versehen ist. Der Werkstückspindel 16 ist ein Reitstock 18 zugeordnet. Zwischen der Werkstückspindel 16 und dem Reitstock 18 kann ein Werkstück aufgenommen werden (in Fig. 1 nicht dargestellt).

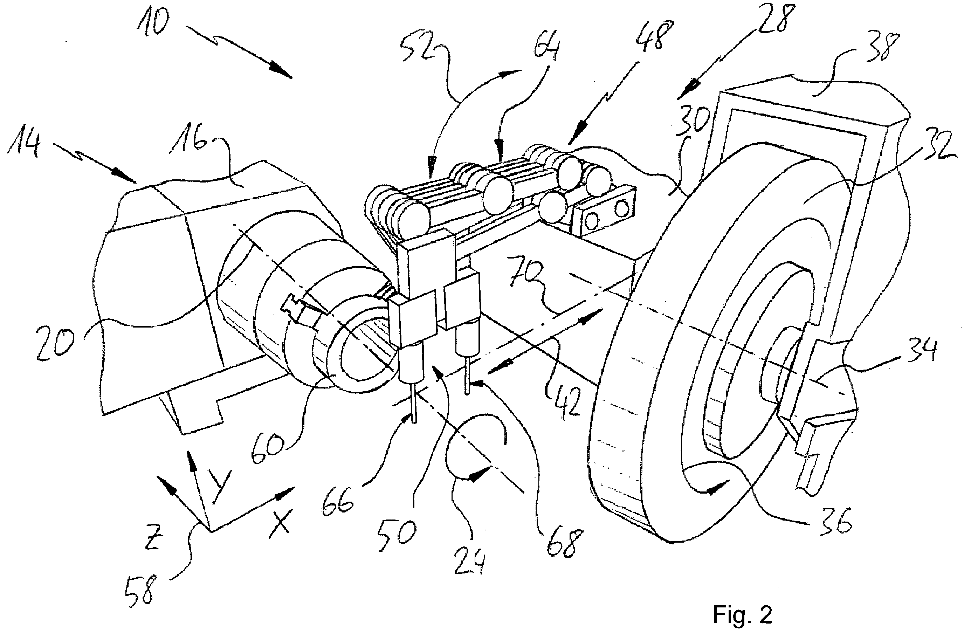

Die Werkstückspindel 16 weist eine Werkstückspindelachse 20 auf, um die das Werkstück gegebenenfalls rotatorisch antreibbar ist, vgl. auch einen mit 24 bezeichneten Pfeil. Die Werkstückspindelachse 20 kann etwa auch als C-Achse bezeichnet werden. Eine C-Achse kann eine gezielte, gesteuerte Verdrehung eines in der Werkstückaufnahme 14 aufgenommenen Werkstücks erlauben. Ein mit 22 bezeichneter Pfeil kennzeichnet eine mögliche Verfahrbewegung entlang einer sogenannten Z-Achse, vgl. auch Fig. 2. Entlang der Z-Achse kann eine Relativbewegung zwischen dem Werkstück und einem Bearbeitungswerkzeug erfolgen. Hierfür können entweder das Werkstück, das Werkzeug, oder aber beide gemeinsam entlang der Z-Achse verfahren werden. Die Z-Achse liegt parallel zur Werkstückspindelachse 20 oder aber deckungsgleich zu dieser.

Am Maschinentisch 12 der Werkzeugmaschine 10 ist ferner eine Werkzeugeinheit 28 aufgenommen. Die Werkzeugeinheit 28 kann einen Werkzeugtisch 29 aufweisen. Der Werkzeugtisch 29 kann etwa als Kreuztisch ausgebildet sein. Andere Gestaltungen sind denkbar. Die Werkzeugeinheit 28 weist eine Werkzeugspindel 30 auf, die vorliegend etwa als Schleifkopf ausgebildet ist. An der Werkzeugspindel 30 ist ein Werkzeug 32, hier etwa eine Schleifscheibe, aufgenommen. Das Werkzeug 32 kann durch die Werkzeugspindel 30 um eine Werkzeugspindelachse 34 herum in Rotation versetzt werden, vgl. einen mit 36 bezeichneten Pfeil. In Fig. 1 ist das Werkzeug 32 nur abschnittsweise sichtbar. Die Werkzeugeinheit 28 weist ferner eine Haube 38 auf, die einen Großteil des Werkzeugs 32 verdeckt.

Insbesondere wenn die Werkzeugeinheit 28 einen Werkzeugtisch 29 in Form eines Kreuztisches aufweist, kann die Werkzeugspindel 30 entlang eines mit 40 bezeichneten Pfeils relativ zur Werkstückaufnahme 14 verfahren werden. Der Pfeil 40 kann auch der Z-Achse zugeordnet sein, vgl. Fig. 2. Insbesondere dann, wenn die Werkstückaufnahme 14 bei der Bearbeitung des Werkstücks nicht zur Längsverschiebung entlang des Pfeils 22 vorgesehen ist, kann die Relativbewegung zwischen dem Werkstück und dem Werkzeug 32 durch ein Verfahren der Werkzeugspindel 30 mit dem daran aufgenommenen Werkzeug 32 entlang des Pfeils 40 erfolgen.

Ein mit 42 bezeichneter Pfeil beschreibt eine Zustellrichtung, die einer X-Achse zugeordnet werden kann, vgl. wiederum Fig. 2. Entlang der X-Achse kann eine Zustellung des Werkzeugs 32 in Richtung auf das Werkstück erfolgen, um mit diesem in Eingriff zu treten. Die X-Achse kann auch als Zustellachse bezeichnet werden, vgl. die Zustellachse 70 in Fig. 2. Die Bewegung entlang der X-Achse oder Zustellachse 70 kann etwa durch geeignete Führungsmittel des Werkzeugtisches 29 und/oder des Maschinentisches 12 geführt werden.

Beispielhaft weist in Fig. 1 die Werkzeugeinheit 28 ferner eine B-Achse 44 auf. In der Darstellung gemäß Fig. 1 verläuft die B'-Achse 44 senkrecht zur Ansichtsebene. Die B-Achse 44 ermöglicht ein Verschwenken der Werkzeugspindel 30, vgl. einen mit 46 bezeichneten Schwenkpfeil. Die B-Achse 44 kann es erlauben, eine Mehrzahl von Werkzeugspindeln 30 mit Werkzeugen 32 an der Werkzeugeinheit 28 vorzusehen. Diese können bei Bedarf durch Verschwenken der B-Achse 44 in eine Bearbeitungsstellung überführt werden. Auf diese Weise kann eine flexible Bearbeitung, etwa mit Werkzeugen 32 mit verschiedenen Schleifmittelwerkstoffen ermöglicht werden. Somit können etwa verschiedene Schleifscheiben für eine Grobbearbeitung, Feinbearbeitung oder Finishbearbeitung ohne besonderen Rüstaufwand mit dem Werkstück in Eingriff gebracht werden. Die Zuordnung der B-Achse 44 zur Z-Achse, vgl. die Pfeile 22 und 40, bzw. zur X-Achse, vgl. den Pfeil 42, kann grundsätzlich auch anders als in Fig. 1 gestaltet sein. Beispielhaft könnte die B-Achse 44 alternativ auch parallel zur Werkstückspindelachse 20 bzw. zur Werkzeugspindelachse 34 angeordnet sein. Bei einer solchen Gestaltung könnte etwa ein weiteres Werkzeug an einem Ausleger aufgenommen sein, der an der Werkzeugspindel 30 aufgenommen ist und zum Einschwenken des weiteren Werkzeugs um die Werkzeugspindelachse 34 in Richtung auf das Werkstück verschwenkbar ist (in Fig. 1 nicht dargestellt).

Es versteht sich, dass die Werkzeugmaschine 10 auch ohne die B-Achse 44 ausgeführt sein kann, insbesondere dann, wenn nur eine Werkzeugspindel 30 vorgesehen ist.

An der Werkzeugspindel 30 ist eine Messeinrichtung 48 aufgenommen, vgl. auch Fig. 2. Die Messeinrichtung 48 weist einen Messaufsatz 50 auf. Ein mit 52 bezeichneter Pfeil deutet an, dass die Messeinrichtung 48 mit dem Messaufsatz 50 verschwenkbar an der Werkzeugspindel 30 aufgenommen ist.

Die Werkzeugmaschine 10 weist ferner eine Steuereinrichtung 56 auf, die insbesondere dazu ausgebildet sein kann, die Werkstückaufnahme 14 mit der Werkstückspindel 16, die Werkzeugeinheit 28 mit der Werkzeugspindel 30, das Werkzeug 32 sowie gegebenenfalls die B-Achse 44 bzw. die Werkstückspindelachse 20 gezielt zu deren Antrieb bzw. zu deren Verlagerung anzusteuern. Bewegungen können dabei etwa entlang der X-Achse oder der Z-Achse erfolgen. Ferner kann die Steuereinrichtung 56 dazu ausgebildet sein, von Komponenten der Werkzeugmaschine 10 Betriebsparameter, etwa Lageparameter, zugeführt zu bekommen. Die Steuereinrichtung 56 kann etwa eine Erfassungseinheit, eine Auswerteeinheit und eine Kontrolleinheit aufweisen.

In Fig. 2 ist zur Veranschaulichung der Achsen X, Y, Z der Werkzeugmaschine 10 ein Koordinatensystem 58 dargestellt. Es versteht sich, dass die genannten Achsen und Richtungen lediglich zu Veranschaulichungszwecken dienen und nicht dazu, den Gegenstand der Offenbarung einzuschränken. Es versteht sich ferner, dass Bewegungen von Komponenten der Werkzeugmaschine 10 zueinander grundsätzlich relativ erfolgen können. Das heißt, wenn etwa ein erstes Element gegenüber einem zweiten Element verfahrbar sein soll, kann entweder das erste Element oder das zweite Element die Bewegung vollziehen. Ebenso ist denkbar, dass beide Elemente gemeinsam bewegt werden.

In Fig. 2 ist an der Werkzeugspindel 16 der Werkstückaufnahme 14 eine Werkstückspannvorrichtung 60 aufgenommen, die etwa als Spannfutter ausgebildet sein kann. Aus Veranschaulichungsgründen wurde in Fig. 2 auf die Darstellung verschiedener Komponenten der Werkzeugmaschine 10 verzichtet. Beispielhaft ist kein Reitstock 18 dargestellt. Es versteht sich, dass etwa gerade bei kurzen Werkstücken eine einseitige Aufnahme an der Werkstückspannvorrichtung 60 genügen kann. Demgegenüber können etwa besonders lange und/oder dünnwandige Werkstücke etwa neben der Werkstückspindel 16 und dem Reitstock 18, vgl. Fig. 1, zusätzlich über zumindest eine zwischengelagerte Lünette (nicht dargestellt) abgestützt werden.

Die Messeinrichtung 48 weist eine Einschwenkmimik auf, die etwa als Koppelgetriebemechanismus 64 ausgebildet sein kann. Die Messeinrichtung 48 ist an der Werkzeugspindel 30 (bzw. der Werkzeugeinheit 28) aufgenommen und kann gemeinsam mit dieser entlang der Zustellachse 70 verfahren werden. Die Zustellachse 70 kann der X-Achse entsprechen oder parallel zu dieser angeordnet sein. Der Pfeil 42 deutet die zugehörige Hin- und Herbewegung an.

In Fig. 2 befindet sich die Messeinrichtung 48 in der Messstellung. In der Messstellung ist der Messaufsatz 50, der einen ersten Schaltmesskopf 66 und einen zweiten Schaltmesskopf 68 aufweist, in den Bereich der Werkstückspindelachse 20 verfahren bzw. verschwenkt.

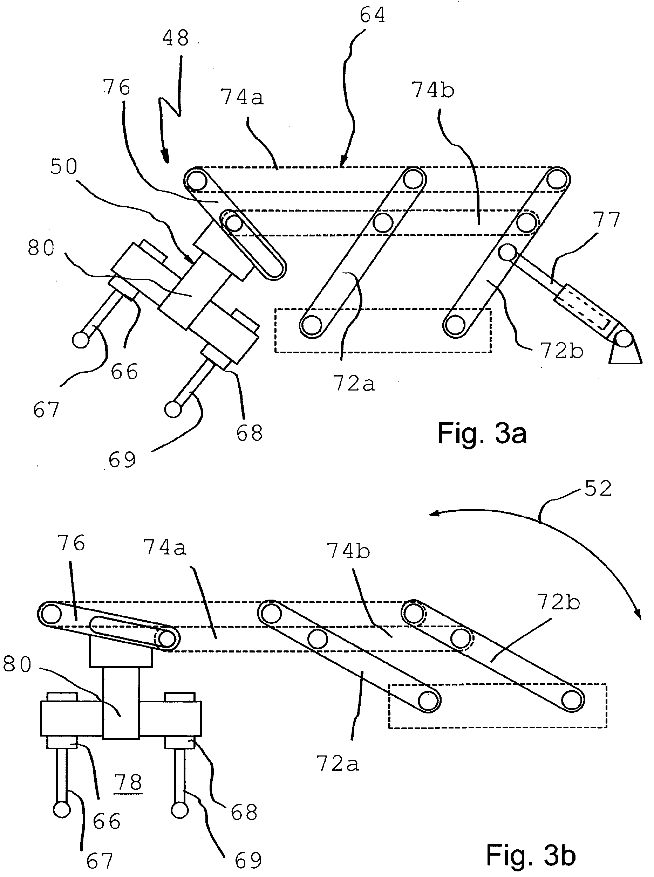

In den Fig. 3a und 3b wird ein beispielhafter Aufbau der Messeinrichtung 48 erläutert. Die Messeinrichtung 48 weist einen Schwenkmechanismus auf, der durch den Koppelgetriebemechanismus 64 verkörpert ist. Der Koppelgetriebemechanismus 64 ist vorliegend etwa als Doppelschwinge ausgeführt. Andere Mechanismen zur Realisierung der Einschwenkfunktionalität der Messeinrichtung 48 sind denkbar.

Der Koppelgetriebemechanismus 64 weist zwei Koppelglieder 72a, 72b auf, die etwa als Schwingen ausgebildet sind. Die Schwingen 72a, 72b sind drehbar an der Werkzeugspindel 30 aufgenommen, vgl. auch Fig. 2. Die Schwingen 72a, 72b sind jeweils mit Koppelgliedern 74a, 74b verbunden, die etwa als Koppeln ausgestaltet sind. Bei den in den Fig. 3a und 3b veranschaulichten Längenverhältnissen kann sich sowohl für die Schwingen 72a, 72b als auch für die Koppeln 74a, 74b beim Verschwenken, vgl. den Pfeil 52, jeweils zueinander eine Parallelführung ergeben. Andere Längenverhältnisse sind ohne Weiteres denkbar.

Die Koppeln 74a, 74b sind in ihrem vorderen Bereich mit einem Ausleger 76 verbunden. Der Ausleger 76 ist mit der Koppel 74a etwa über ein Drehgelenk verknüpft. Die Koppel 74b ist mit dem Ausleger 76 etwa über eine Längsnut verbunden. Der Koppelgetriebemechanismus 64 kann etwa dahingehend ausgestaltet werden, bestimmte zulässige Bauraumverhältnisse zu erfüllen. Insbesondere im Gegensatz zu einem reinen Schwenkarm können sich Bauraumvorteile ergeben. Es versteht sich jedoch, dass das Verschwenken der Messeinrichtung 48 auch in anderer Weise bewirkt werden kann. In Fig. 3a ist ein Stellzylinder 77 angedeutet, der mit der Schwinge 72b gekoppelt ist. Beim Ausfahren des Stellzylinders 77 kann der Koppelgetriebemechanismus 64 verschwenkt werden. Andere Antriebsmittel und Anlenkpunkte für das Verschwenken sind denkbar.

Am Ausleger 76 ist ein Trägerstück 80 aufgenommen. Das Trägerstück 80 und der Ausleger 76 können einstückig ausgebildet sein. Das Trägerstück 80 und der Ausleger 76 können grundsätzlich auch mehrstückig gestaltet sein. Jedem der Schaltmessköpfe 66, 68 des Messaufsatzes 50 ist ein Tastarm 67, 69 zugeordnet. Die Tastarme 67, 69 können Tastkugeln oder ähnliche Gestaltelemente aufweisen, mit denen ein Werkstück kontaktiert werden kann.

Die in Fig. 3b gezeigte Darstellung kann etwa der Messstellung gemäß Fig. 2 entsprechen. Demgegenüber veranschaulicht Fig. 3a etwa eine Außer-Eingriff-Stellung der Messeinrichtung 48. In der Messstellung gemäß Fig. 3b kann der Messaufsatz 50 mit dem ersten Schaltmesskopf 66 und dem zweiten Schaltmesskopf 68 ein Werkstück etwa derart umschließen, dass ein wechselseitiges Antasten ermöglicht ist. Die Schaltmessköpfe 66, 68 bzw. deren Tastarme 67, 69 definieren einen Messbereich 78, der etwa die maximale Größe eines zu vermessenden Werkstücks bzw. eines zu vermessenden Abschnitts des Werkstücks bestimmt.

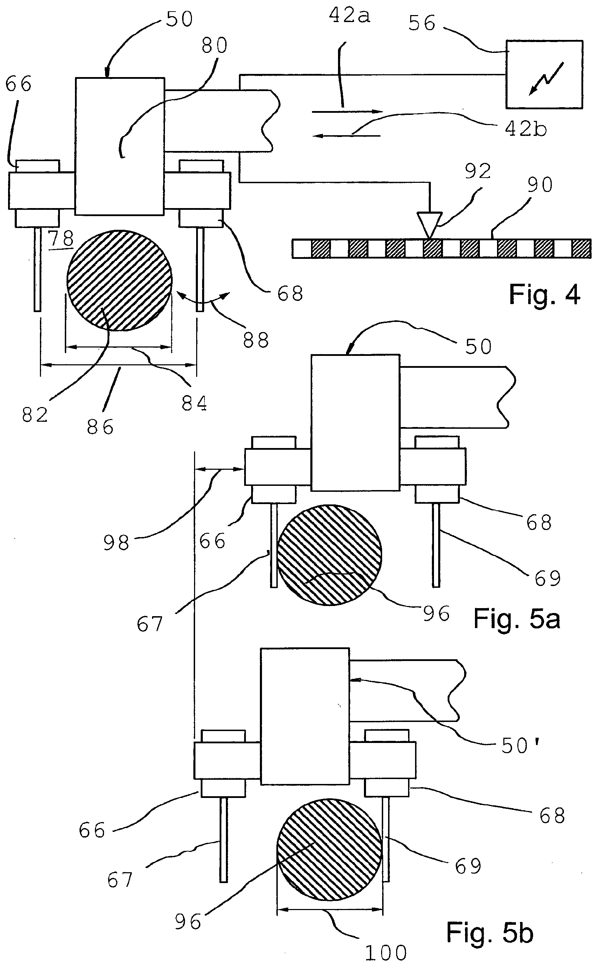

In Fig. 4 wird beispielhaft dargestellt, wie der Messaufsatz 50 der Messeinrichtung 48 mit den Schaltmessköpfen 66, 68 vor der Vermessung geeicht werden kann. Zu diesem Zweck ist eine bekannte Referenzgeometrie 82, etwa eines Referenzwerkstücks, in den Messbereich 78 eingeführt worden. Das Referenzwerkstück mit der Referenzgeometrie 82 kann etwa in der Werkstückaufnahme 14 der Werkzeugmaschine 10 aufgenommen sein. Das Einbringen in den Messbereich 78 kann etwa durch das Verschwenken der Messeinrichtung 48 erfolgen.

Die Referenzgeometrie 82 des Referenzwerkstücks weist ein bekanntes Referenzmaß 84 auf. Zum Eichen bzw. zum Kalibrieren des Messaufsatzes 50 wird das Referenzmaß 84 bzw. die Referenzgeometrie 82 wechselseitig mit dem ersten Schaltmesskopf 66 bzw. dem zweiten Schaltmesskopf 68 seitlich angetastet. Die zugehörigen Bewegungen der Werkzeugspindel 30, vgl. Fig. 2, sind durch die Pfeile 42a, 42b angedeutet. Der Messaufsatz 50 ist beispielhaft über die Einschwenkmimik 64 (vgl. Fig. 3a und Fig. 3b) und die Werkzeugspindel 30 mit einem Positionsgeber 92 und einer Maßverkörperung 90 verknüpft, die etwa eine Ist-Lage der Werkzeugeinheit 28 entlang der Zustellachse 70 beschreibt.

Es versteht sich, dass der Messaufsatz 50 bzw. die Schaltmessköpfe 66, 68 in ähnlicher Weise auch mit einer Maßverkörperung zusammenwirken können, die die etwa eine Ist-Lage der Werkzeugeinheit 28 entlang einer Längsachse (oder: Vorschubachse) beschreibt (in Fig. 4 nicht dargestellt). Diese Achse kann parallel zur Z-Achse verlaufen. Auf diese Weise kann eine Lagebestimmung in zwei Dimensionen (2D) erfolgen. Sollte der Werkzeugeinheit 28 insgesamt mittelbar oder unmittelbar ferner auch entlang der Y-Achse relativ zum Werkstück verfahrbar sein, kann gleichermaßen auch entlang dieser Achse eine Lagebestimmung erfolgen. Demzufolge ist es gemäß weiteren Ausgestaltungen ermöglicht, die Lage des Messaufsatzes 50 bzw. der Schaltmessköpfe 66, 68 in drei Dimensionen (3D) zu bestimmen.

Beim jeweiligen Antasten der Referenzgeometrie 82 mit dem ersten Schaltmesskopf 66 und dem zweiten Schaltmesskopf 68 können zugehörige Ist-Lagen erfasst werden. In einfacher Weise kann aus dem Abstand zwischen diesen Ist- Lagen und dem bekannten Referenzmaß 84 ein Basisabstand 86 ermittelt werden. Der Basisabstand 86 kann als Grundlage für alle nachgelagerten Messungen an Werkstücken dienen. Die vom Positionsgeber 92 erfassten Positionsdaten können etwa der Steuereinrichtung 56 zur Auswertung zugeführt werden. Die Lageerfassung kann auch anderweitig erfolgen. Der Positionsgeber 92 kann etwa als Inkrementalgeber oder als Absolutgeber ausgestaltet sein. Ferner können etwa optische, induktive, kapazitive oder magnetische Messprinzipien genutzt werden.

In Fig. 4 deutet ein mit 88 bezeichneter Pfeil ferner an, dass etwa der zweite Schaltmesskopf 68 um einen gewissen Betrag auslenkbar gestaltet sein kann. Gemäß einigen Ausgestaltungen kann eine solche Auslenkung des Schaltmesskopfes 68 erfasst werden und der Steuereinrichtung 56 zugeführt werden. Der erste Schaltmesskopf 66 kann in gleicher Weise gestaltet sein. Beim Antasten der Referenzgeometrie 82 im Rahmen des Eichvorgangs können etwa der erste Schaltmesskopf 66 und der zweite Schaltmesskopf 68 in ihrer Neutralstellung, also ohne wesentliche Auslenkung, kalibriert werden. Zu diesem Zweck kann etwa die Ist-Lage der Werkzeugspindel 30 entlang der Zustellachse 70 variiert werden, bis das von den Schaltmessköpfen 66, 68 jeweils ausgegebene Positionssignal etwa null ergibt. In einer solchen Neutralstellung können etwa sogenannte Messkreise des ersten und zweiten Schaltmesskopfes 66, 68 genullt werden, falls möglich und erforderlich. In nachfolgenden Messungen kann die Auslenkung des ersten Schaltmesskopfes 66 bzw. des zweiten Schaltmesskopfes 68 beim Antasten zusätzlich zu den Ist-Lagen der Werkzeugspindel 30 entlang der Zustellachse 70 berücksichtigt werden, um exakte Abstände ermitteln zu können. Eine derartige Funktionalität bezieht sich jedoch lediglich auf einige beispielhafte Ausgestaltungen, die von einer erweiterten Funktionalität der Schaltmessköpfe 66, 68 Gebrauch machen. Gemäß alternativen bevorzugten Ausgestaltungen können die Schaltmessköpfe 66, 68 einfacher gestaltet sein.

In den Fig. 5a und 5b wird beispielhaft die Ermittlung eines Durchmessers eines Werkstücks 96 dargestellt. In Fig. 5a kommt der erste Schaltmesskopf 66 des Messaufsatzes 50 zur Anlage an das Werkstück 96. Ein anschließendes Verfahren der Werkzeugspindel 30 und somit auch des Messaufsatzes 50 führt dazu, dass der zweite Schaltmesskopf 68 auf der gegenüberliegenden Seite zur Anlage an das Werkstück 96 gelangt. Der Verfahrweg der Werkzeugspindel 30 wird durch einen mit 98 bezeichneten Pfeil veranschaulicht. In Kenntnis des Basisabstands 86, vgl. Fig. 4, und des Verfahrweges 98 kann in einfacher Weise ein Ist-Abstand 100, insbesondere ein Ist-Durchmesser, des Werkstücks 96 ermittelt werden. Ähnliche Messungen zur Abstandsbestimmung können in anderen Raumrichtungen durchgeführt werden. Bei einer Kombination mehrerer Verfahrachsen, die auch als Messachsen dienen, können Abstände im zweidimensionalen Raum oder sogar im dreidimensionalen Raum bestimmt werden.

Die in Fig. 4 durch den Pfeil 88 angedeutete Auslenkung des Schaltmesskopfes 68 bzw. des Schaltmesskopfes 66 kann etwa Korrekturwerte ergeben, die bei der Ermittlung des Ist-Abstands 100 berücksichtigt werden können. In alternativer Weise kann beim jeweiligen Antasten des ersten bzw. des zweiten Schaltmesskopfes 66, 68 die Werkzeugspindel 30 so lange verfahren werden, bis das durch die Schaltmessköpfe 66, 68 abgegebene Signal etwa einer Neutralstellung, also einer Null-Auslenkung oder einer Nahezu-Null-Auslenkung, entspricht. Diese Varianten treffen jedoch nur auf einige denkbare Gestaltungen der Schaltmessköpfe 66, 68 zu.

Bei der Ermittlung des Ist-Abstands 100 können maschinenseitige Einflussfaktoren, etwa der thermische Gang der Werkzeugmaschine 10, grundsätzlich nur über den geringen Verfahrweg 98 auf das Messergebnis einwirken. Das "Übermaß", das etwa der Differenz zwischen dem Basisabstand 86 und dem Referenzabstand 84 entspricht, erlaubt eine Vermessung einer Vielzahl verschiedener Werkstücke 96 mit unterschiedlichen Abmessungen.

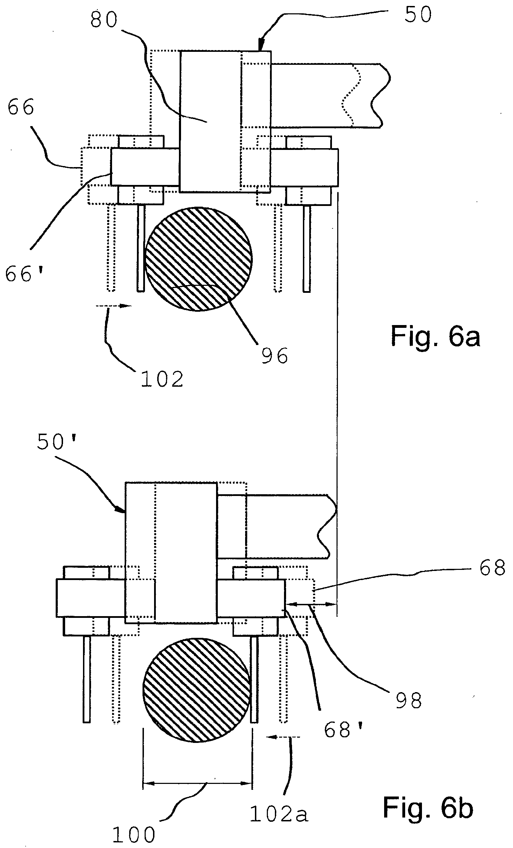

In den Fig. 6a und 6b wird ein den Fig. 5a und 5b grundsätzlich ähnlicher Messablauf erläutert. Das Antasten des Werkstücks 96 erfolgt jedoch mit unterschiedlichen Zustellgeschwindigkeiten oder Antastgeschwindigkeiten. So kann es etwa von Vorteil sein, den Schaltmesskopf 66 zunächst in einem Eilgang bzw. Schnellgang einer Vorposition zuzuführen, in der dieser das Werkstück 96 noch nicht kontaktiert. Zur Vermeidung von Beschädigungen des Messaufsatzes 50 bzw. des Werkstücks 96 kann, ausgehend von der Vorposition, die weitere Zustellung in einem Tastgang erfolgen, bis der Schaltmesskopf 66' das Werkstück 96 antastet.

In gleicher Weise kann das Antasten des Schaltmesskopfes 68 erfolgen, indem dieser zunächst in einem Schnellgang auf eine Vorposition zugeführt wird. Ausgehend von der Vorposition kann die weitere Zustellung bzw. das weitere Antasten in einem langsamen Tastgang erfolgen, vgl. einen mit 102a bezeichneten Pfeil. Der Schaltmesskopf 68' hat das Werkstück 96 angetastet. Ausgehend vom Verfahrweg 98 und dem bekannten Basisabstand 86 kann der Ist-Abstand des Werkstücks 96 ermittelt werden.

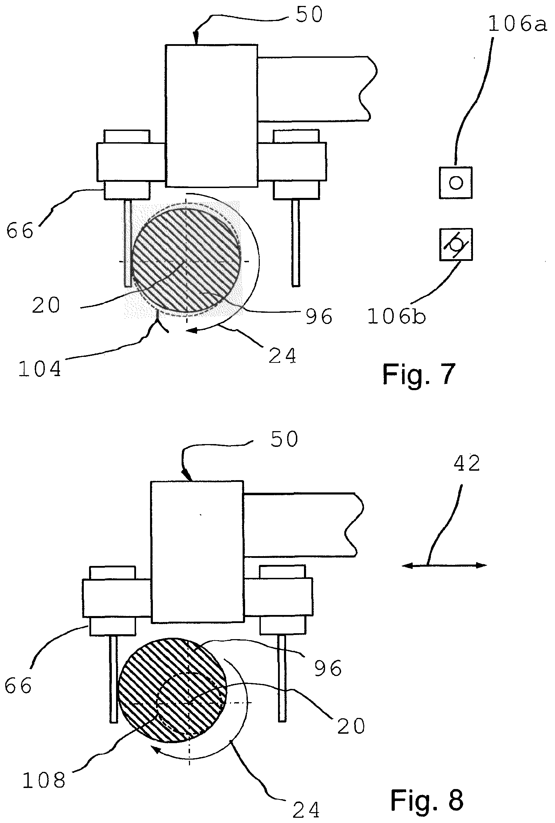

Fig. 7 veranschaulicht, dass der Messaufsatz 50 weitere Anwendungsmöglichkeiten erlaubt. Das in Fig. 7 zu prüfende Werkstück 96 weist eine mit 104 angedeutete Formabweichung auf. Dabei kann es sich etwa um eine Rundheitsabweichung oder aber eine Zylinderformabweichung handeln, vgl. beispielhaft mit 106a, 106b bezeichnete Toleranzsymbole. Der Schaltmesskopf 66 kann auslenkbar gestaltet sein und gemäß einigen Ausgestaltungen beim Umlauf des Werkstücks 96 um die Werkstückspindelachse 20 die Formabweichung 104 kontinuierlich oder diskontinuierlich erfassen. In diesem Zusammenhang kann es bevorzugt sein, wenn der Schaltmessköpfe 66 einen großen Proportionalitätsbereich aufweist, um auch große Abweichungen erfassen zu können. Es ist jedoch gemäß weiterer bevorzugter Ausgestaltungen vorgesehen, der Schaltmesskopf 66 als Triggerschalter (auch: Steuerimpulsauslöser) auszugestalten. Der Schaltmesskopf 66 muss somit die Auslenkung (etwa eines Tastarms) selbst nicht hochgenau erfassen, sondern kann etwa bei einer bestimmten Auslenkung einen Auslöseimpuls (Triggerimpuls) erzeugen. Diese Charakteristik kann auch auf den Schaltmesskopf 68 zutreffen.

Zylinderformtoleranzen können etwa dann erfasst werden, wenn die Werkzeugspindel 30, an der die Messeinrichtung 48 aufgenommen ist, beim Umlauf des Werkstücks 96 parallel zur Werkstückspindelachse 20 entlang der Z-Achse verlagert wird. Beispielhaft kann etwa so eine Zylinderfläche entlang einer Spiralbahn abgetastet werden. Auf diese Weise kann das Werkstück 96 "gescannt" werden.

In Fig. 8 ist das Werkstück 96 derart ausgestaltet, dass um einen zentrischen Abschnitt 108 ein exzentrischer Abschnitt um die Werkstückspindelachse 20 umläuft. Derartige zumindest abschnittsweise exzentrisch gestaltete Werkstücke 96 können etwa dann vermessen werden, wenn die Steuereinrichtung 56 dazu ausgestaltet ist, die Werkzeugspindel 30 entlang der X-Achse, also der Zustellachse 70, und gleichzeitig das Werkstück 96 um die sogenannte C-Achse anzutreiben, die vorliegend mit der Werkstückspindelachse 20 zusammenfällt. Beispielhaft kann die gekoppelte Bewegung erwarteten Kontaktstellen des ersten Schaltmesskopfes 66 auf dem Werkstück 96 bei dessen exzentrischem Umlauf folgen. Auch auf diese Weise können grundsätzlich etwa Rundheitstoleranzen oder Zylinderformtoleranzen erfasst werden. Es ist jedoch auch vorstellbar, exzentrische Werkstücke 96 abschnittsweise anzutreiben und jeweils mit beiden Schaltmessköpfen 66, 68 analog zu den Fig. 5a, 5b bzw. Fig. 6a, 6b Ist-Abstände, etwa Ist-Durchmesser, zu erfassen.

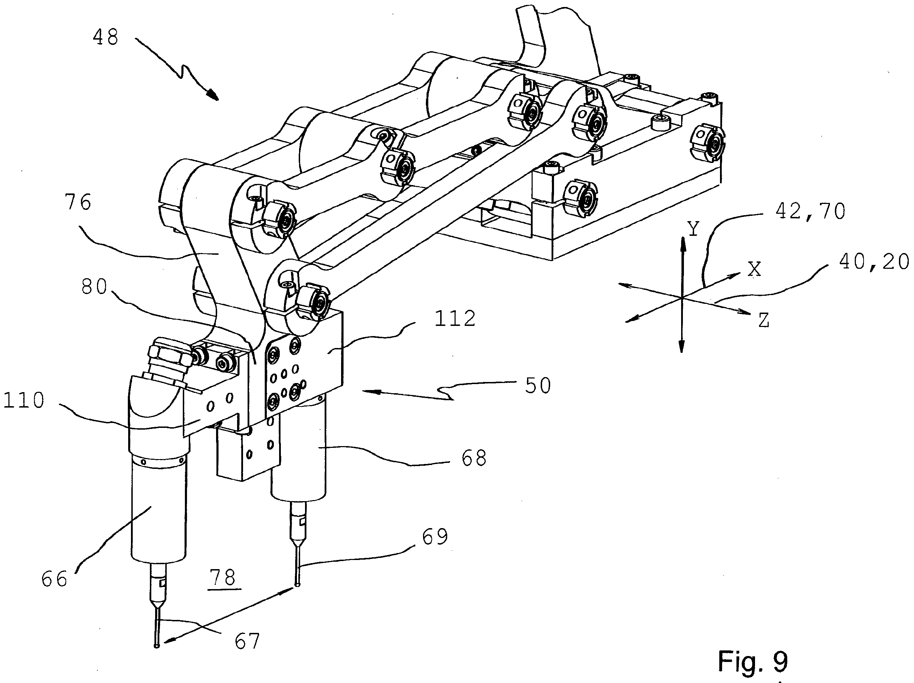

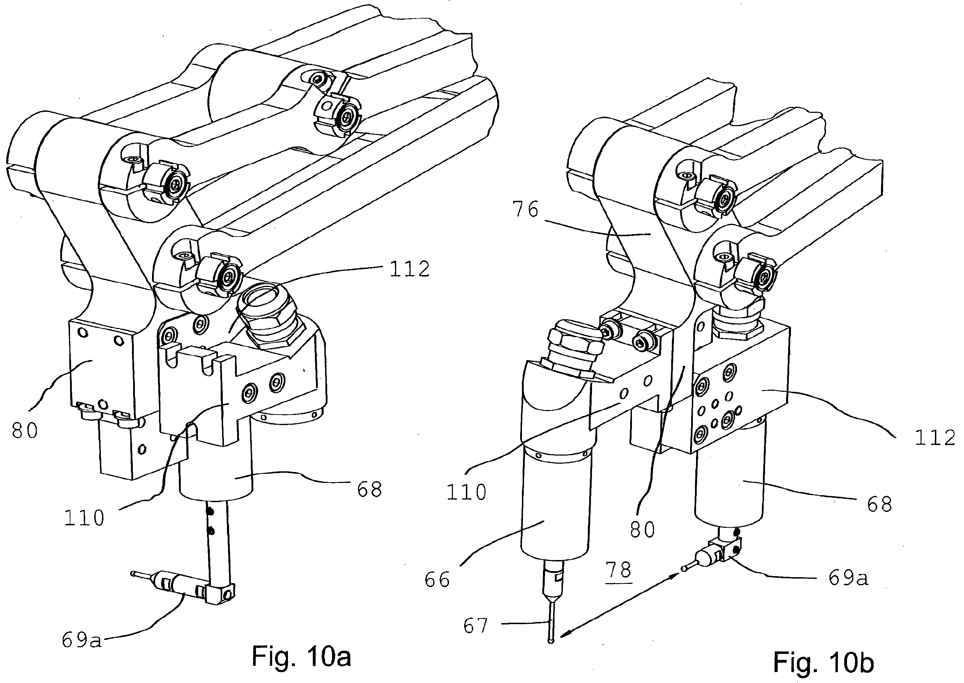

Fig. 9 sowie Fig. 10a und 10b zeigen perspektivische Ansichten einer modularen Messeinrichtung 48, die etwa an der Werkzeugeinheit 28 der Werkzeugmaschine 10 gemäß Fig. 2 aufgenommen sein kann. In den verschiedenen Darstellungen befindet sich die Messeinrichtung 48 in verschiedenen Modulkonfigurationen. Die Messeinrichtung 48 kann verschwenkbar ausgebildet zu sein, um den Messaufsatz 50 flexibel und schnell zwischen einer Messstellung und einer Außer-Eingriff-Stellung zu verlagern, vgl. Fig. 3a und Fig. 3b. Die Messeinrichtung 48 kann einen Koppelgetriebemechanismus aufweisen, der durch einen geeigneten Antrieb antreibbar ist, um die Schwenkbewegung zu ermöglichen. Ein in Fig. 9 dargestelltes Koordinatensystem X, Y, Z veranschaulicht die zugehörigen Achsen der Werkzeugmaschine, vgl. auch Fig. 2. Der Messaufsatz 50 weist ein Trägerstück 80 auf, an dem die Schaltmessköpfe 66, 68 aufgenommen sind. Der Schaltmesskopf 66 ist über ein Adapterstück 110 am Trägerstück 80 aufgenommen. Der Schaltmesskopf 68 ist über ein Adapterstück 112 am Trägerstück 80 aufgenommen. Das Trägerstück 80 ist dazu ausgebildet, die Adapterstücke 110, 112 und somit die Schaltmessköpfe 66, 68 in einer Mehrzahl definierter Soll-Lagen aufzunehmen. Auf diese Weise kann sich eine Mehrzahl an Modulkonfigurationen ergeben, wodurch die Messeinrichtung 48 insgesamt hochflexibel für eine Mehrzahl an Messaufgaben eingesetzt werden kann.

Fig. 9 veranschaulicht beispielhaft eine erste Modulkonfiguration. Der erste Schaltmesskopf 66 und der zweite Schaltmesskopf 68 sind im Wesentlichen parallel zueinander und in gleicher Höhe (bezüglich der Y-Achse) am Trägerstück 80 aufgenommen. Der Messbereich 78 (entlang der X-Achse) zwischen den Tastarmen 67, 69 ist breit, so dass auch größere Werkstück von den Schaltmessköpfen 66, 68 eingeschlossen werden können, etwa um einen Durchmesser zu bestimmen.

Fig. 10a zeigt die Messeinrichtung 48 in einer zweiten Modulkonfiguration. Das Adapterstück 110 ist im Gegensatz zu seiner in Fig. 9 gezeigten Lage von seiner ursprünglichen Position entfernt und seitlich mittelbar über das Adapterstück 112 am Trägerstück 80 aufgenommen. Der Schaltmesskopf 66 ist in Fig. 10a aus Veranschaulichungsgründen nicht dargestellt. Der Schaltmesskopf 66 kann in der in Fig. 10a gezeigten Modulkonfiguration gewissermaßen in einer "Parkstellung" axial versetzt (bezogen auf die Z-Achse, vgl. Fig. 9) zum Schaltmesskopf 68 aufgenommen sein. Der Schaltmesskopf 66 und sogar das Adapterstück 110 könnten jedoch auch gänzlich vom Trägerstück 80 entfernt sein. Am Schaltmesskopf 68 ist beispielhaft ein gekrümmter Tastarm 69a aufgenommen. Der Tastarm 69a ist abgewinkelt. Mit dem Tastarm 69a kann das Schaltmesskopf 68 in der in Fig. 10a gezeigten Messkonfiguration ein Werkstück axial antasten. Auf diese Weise können etwa axiale Flächen erfasst oder Axialabstände bestimmt werden. Ferner kann der Tastarm 69a in eine axiale Vertiefung oder Ausnehmung eines Wertstücks eindringen. Auf diese Weise können etwa Innendurchmesser und ähnliche Messwerte erfasst werden.

Fig. 10b veranschaulicht eine dritte denkbare Modulkonfiguration der Messeinrichtung 48. Ähnlich zur in Fig. 9 gezeigten ersten Modulkonfiguration sind die Schaltmessköpfe 66, 68 entlang der X-Achse (oder: Zustellachse) voneinander beabstandet am Trägerstück 80 aufgenommen. Am Schaltmesskopf 68 kommt ein gekrümmter Tastarm 69a zur Anwendung. Ein abgewinkeltes Ende des Tastarms 69a ist parallel zur X-Achse ausgerichtet. Auf diese Weise schließen die Schaltmessköpfe 66, 68 bzw. die Tastarme 67, 69a in Fig. 10b einen Messbereich 78 (Entlang der X-Achse) ein, der grundsätzlich schmaler als der Messbereich der in Fig. 9 gezeigten Modulkonfigurationen ausfällt. Zum Höhenausgleich (Ausrichtung in Y-Richtung) ist das Adapterstück 112 für den Schaltmesskopf 68 in einer Soll-Lage am Trägerstück 80 aufgenommen, die von der Soll-Lage in der in Fig. 9 veranschaulichten Modulkonfiguration abweicht. Auf diese Weise kann sichergestellt werden, dass auch bei Verwendung des gekrümmten Tastarms 69a die relevanten Kontaktelemente oder Kontaktkugeln der Tastarme 67, 69a auf gleicher Höhe angeordnet sind, also einen gleichen Wert entlang der Z-Achse aufweisen. Mittels der in Fig. 10b gezeigten Modulkonfiguration können grundsätzlich ähnlich zu Fig. 9 Durchmesser und ähnliche Abstandswerte bestimmt werden. Dabei können zu vermessende Werkstücke grundsätzlich geringere Durchmesser aufweisen als bei Fig. 9. Ferner kann mit dieser Messkonfiguration ein Werkstück auch radial (entlang der Zustellachse oder X-Achse) angetastet werden, wobei der Tastarm 69a in Vertiefungen oder Ausnehmungen am Werkstück eindringen kann. Auf diese Weise können etwa Längsnuten, Keilnuten, Verzahnungen oder Ähnliches vermessen werden.

Es versteht sich, dass weitere Modulkonfigurationen denkbar sind. Die in den Fig. 9, 10a und 10b gezeigten Messkonfigurationen stellen lediglich beispielhafte Gestaltungen dar. Eine Modulkonfiguration kann grundsätzlich durch eine definierte Soll-Lage eines der Schaltmessköpfe 66, 68 charakterisiert sein. Ferner kann eine Modulkonfiguration auch durch eine Gestaltung eines der Tastarme 67, 69 definiert sein.

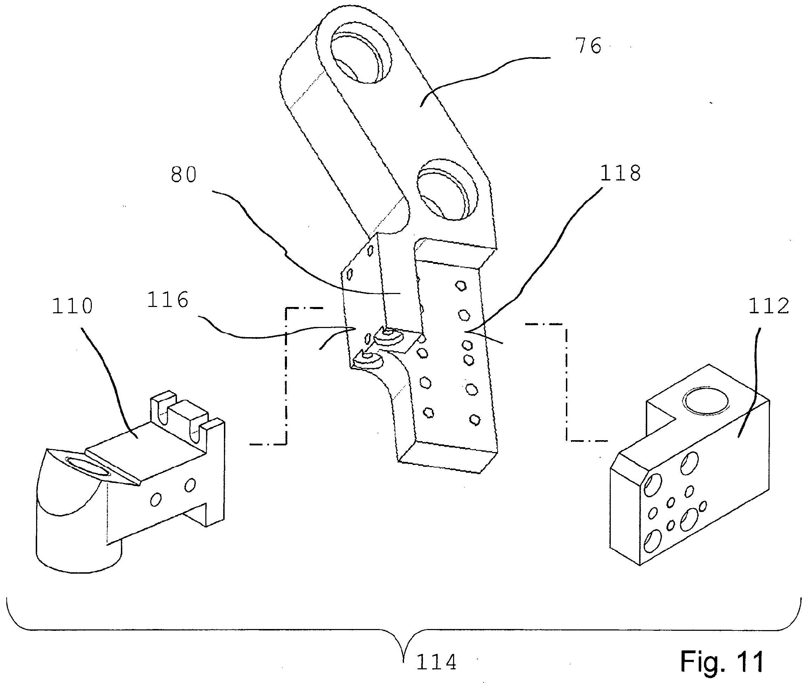

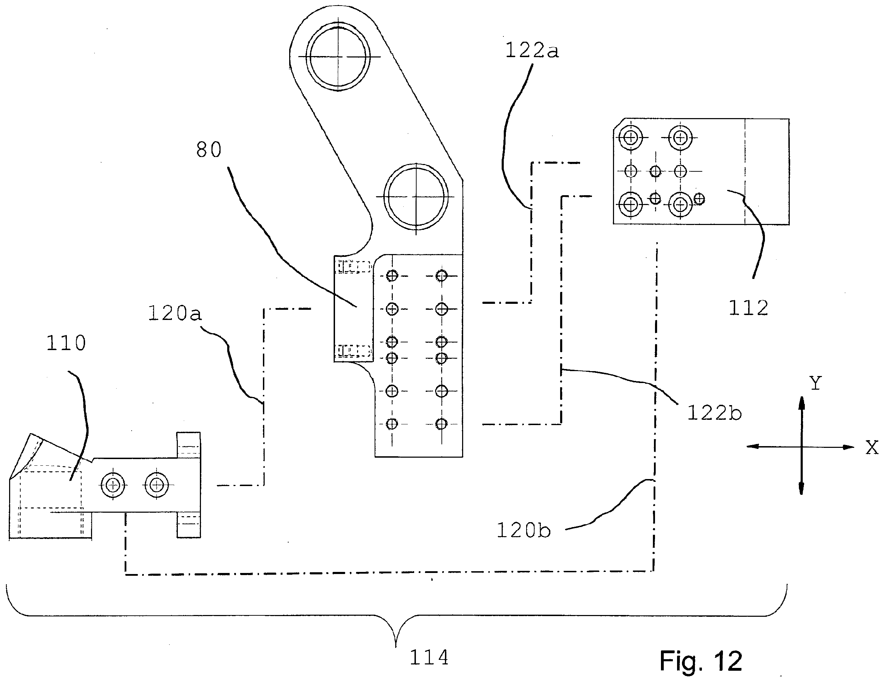

Fig. 11 und Fig. 12 veranschaulichen eine Gestaltung eines Modulbausatzes 114 in explodierter Darstellung. Dem Modulbausatz 114 können grundsätzlich auch die Schaltmessköpfe 66, 68 zugehörig sein, diese sind in den Fig. 11 und 12 nicht dargestellt. Der Modulbausatz 114 umfasst das Trägerstück 80, das erste Adapterstück 110 und das zweite Adapterstück 112. Mit dem Modulbausatz 114 können etwa die in den Fig. 9, 10a und 10b gezeigten Modulkonfigurationen verwirklicht werden. Wie vorstehend bereits erwähnt, kann das Trägerstück 80 gemeinsam mit dem Ausleger 76 einstückig ausgebebildet sein. Grundsätzlich ist auch eine separate Gestaltung denkbar. Am Trägerstück 80 können Kontaktflächen 116, 118 für die Adapterstücke 110, 112 vorgesehen. An den Adapterstücken 110, 112 können korrespondierende Gegenflächen vorgesehen sein (in den Fig. 11 und 12 verdeckt). Ferner können sowohl das Trägerstück 80 als auch die Adapterstücke 110, 112 geeignete Passkonturen aufweisen, etwa Gewindebohrungen und/oder Passbohrungen.

Auf diese Weise kann eine hochgenaue Lagefixierung der Adapterstücke 110, 112 und somit der Schaltmessköpfe 66, 68 erfolgen. Dies kann selbst dann sichergestellt werden, wenn die Messeinrichtung 48 umgerüstet wird, also etwa wenn ein Wechsel der jeweiligen Modulkonfiguration durch Umbau des Modulbausatzes 114 erfolgt. Die Kontaktfläche 116 kann zur Aufnahme des Adapterstücks 110 ausgebildet sein. Die Kontaktfläche 118 kann zur Aufnahme des Adapterstücks 112 ausgebildet sein. Es ist grundsätzlich auch vorstellbar, die Adapterstücke 110, 112 gleichartig auszuführen. Gemäß einer derartigen Ausgestaltung könnten die Kontaktflächen 116, 118 ebenso ähnlich oder gleichartig gestaltet sein. Auf diese Weise könnte der Herstellungsaufwand für die Adapterstücke 110, 112 verringert werden. Es ist jedoch ebenso vorstellbar, die Adapterstücke 110, 112 bewusst verschiedenartig auszuführen und die Kontaktflächen 116, 118 entsprechend anzupassen. Gemäß einer weiteren Ausgestaltung ist es vorgesehen, die Adapterstücke 110, 112 derart auszuführen, dass zumindest eines der Adapterstücke 110, 112 am anderen befestigt werden kann (vgl. Fig. 10a).

Fig. 12 veranschaulicht anhand strichpunktierter Linien verschiedene Konfigurationen des Modulbausatzes 114, die dazu genutzt werden können, verschiedene Modulkonfigurationen zu erzeugen. Das Adapterstück 110 kann etwa in einer Soll-Lage an der Kontaktfläche 116 des Trägerstücks 80 aufgenommen werden, vgl. eine mit 120a bezeichnete Linie. Daneben kann das Adapterstück 110 in einer weiteren Soll-Lage am Adapterstück 112 befestigt werden, vgl. eine mit 120a bezeichnete Linie. Auf diese Weise kann das Adapterstück 110 mittelbar am Trägerstück 80 aufgenommen werden. Es lässt sich somit etwa eine "Parkposition" für das Adapterstück 110 verwirklichen. Das Adapterstück 112 kann in verschiedenen Soll-Lagen am Trägerstück 80 aufgenommen werden, vgl. mit 122a, 122b bezeichnete Linien. Die Soll-Lagen 122a, 122b unterschieden sich im Wesentlichen durch ihre Lage auf der Y-Achse. Somit können etwa unterschiedliche Längen der Schaltmessköpfe 66, 68 bzw. ihrer Tastarme 67, 69 ausgeglichen werden. Es versteht sich, dass das in Fig. 12 aus Veranschaulichungsgründen gezeigte Koordinatensystem X, Y im Wesentlichen anwendbar ist, wenn sich die Messeinrichtung 48 die Messkonfiguration befindet, also etwa wenn die Messeinrichtung 48 in Richtung auf ein zu vermessendes Werkstück eingeschwenkt ist.

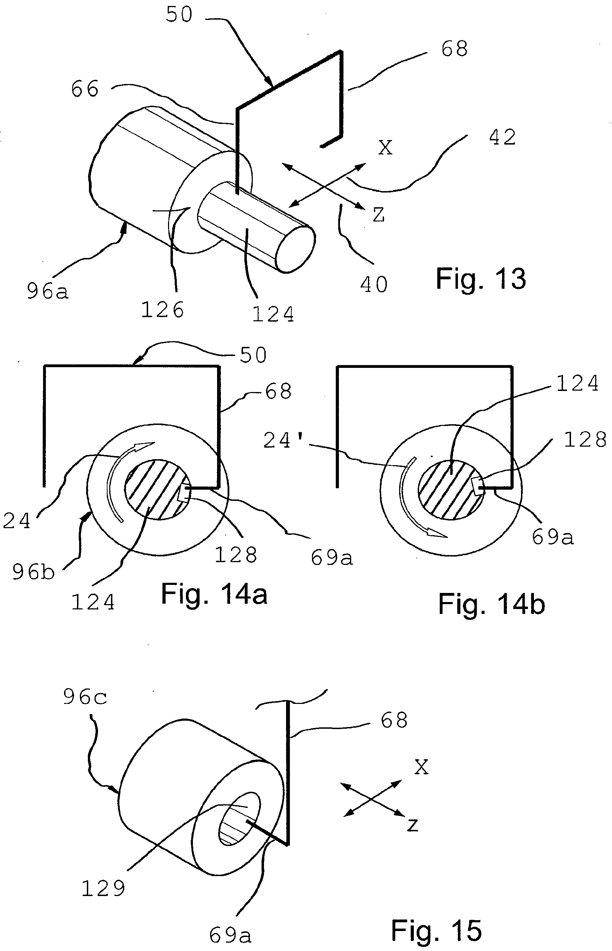

Fig. 13 zeigt eine stark vereinfachte schematische perspektivische Ansicht eines Werkstücks 96a und eines Messaufsatzes 50 zur Veranschaulichung einer Messaufgabe. Aus Veranschaulichungsgründen ist der Messaufsatz 50 mit den Schaltmessköpfe 66, 68 lediglich symbolhaft stark vereinfacht dargestellt. Die zugehörige Modulkonfiguration kann etwa der in Fig. 10b gezeigten Darstellung entsprechen. Die Messaufgabe kann etwa darin bestehen, eine axiale Anschlagfläche 126 des Werkstücks 96a anzutasten. Die Anschlagfläche 126 kann sich etwa an einen Wellenabsatz 124 anschließen. Das axiale Antasten (in Z-Richtung) der Anschlagfläche 126 kann etwa Bestandteil der Bestimmung eines axialen Abstands sein. Es ist ferner vorstellbar, mehrere Punkte der Anschlagfläche 126 anzutasten, um eine Lagetoleranz oder Formtoleranz zu bestimmen. Dabei kann es sich etwa um die Ebenheit der Anschlagfläche 126 handeln. In der gezeigten Konfiguration kann ferner auch etwa ein Durchmesser des Wellenabsatzes 124 bestimmt werden.

Fig. 14a und Fig. 14b zeigen stark vereinfachte schematische frontale Ansichten eines weiteren Werkstücks 96b und eines Messaufsatzes 50 zur Veranschaulichung einer weiteren Messaufgabe. Der Messaufsatz 50 kann sich grundsätzlich in einer Modulkonfiguration befinden, die dem Messaufsatz 50 in Fig. 13 entspricht. Andere Konfigurationen sind denkbar. Die in den Fig. 14a, 14b veranschaulichte Messaufgabe kann unter Verwendung lediglich eines Schaltmesskopfes 66, 68 durchgeführt werden. Es bietet sich daher grundsätzlich etwa auch die in Fig. 11a gezeigte Messkonfiguration an, wenn der Tastarm 69a des Schaltmesskopfes 68 entsprechend gekrümmt und ausgerichtet ist. Das Werkstück 96b weist eine Nut 128 auf, insbesondere eine Längsnut, die in den Wellenabsatz 124 eingebracht ist. Der Tastarm 69a kann radial in die Nut 128 eindringen, um diese zu vermessen. Der Tastarm 69a kann grundsätzlich dazu genutzt werden, einen Nutgrund der Nut 128 anzutasten. Der Tastarm 69a kann jedoch auch dazu genutzt werden, um Seitenwände der Nut 128 anzutasten. Auf diese Weise kann die Nut mit geringem Aufwand vollständig oder nahezu vollständig vermessen werden. Das Antasten des Tastarms 69a des Messaufsatzes 50 an die Seitenwände der Nut 128 erfordert eine definierte Verdrehung des Werkstücks 96b, vgl. einen mit 24 bezeichneten Pfeil in Fig. 14a und einen mit 24' bezeichneten Pfeil in Fig. 14b. Dies kann durch eine definierte Verdrehung einer Werkstückspindel 16 um eine Werkstückspindelachse 20 erfolgen. Wie vorstehend bereits erwähnt, kann eine derartige Funktionalität etwa als C-Achsen-Funktionalität bezeichnet werden. Durch ein Zusammenspiel der Ansteuerung der sogenannten C-Achse und des Antriebs der Werkzeugeinheit 28 kann die Nut 128 hochgenau vermessen werden.

Fig. 15 zeigt eine stark vereinfachte schematische perspektivische Ansicht noch eines weiteren Werkstücks 96c und eines Messaufsatzes (in Fig. 15 nur teilweise dargestellt) zur Veranschaulichung einer weiteren Messaufgabe. Der Messaufsatz kann sich grundsätzlich in einer Modulkonfiguration befinden, die etwa in Fig. 10a veranschaulicht wird. Bei dieser Messaufgabe kann ein gekrümmter Tastarm 69a des Schaltmesskopfes 68 axial in die Bohrung oder Ausnehmung 129 des Werkstücks eindringen. Sofern die Länge des gekrümmten und in der Z-Richtung orientierten Abschnitts des Tastarms 69a ausreicht, könnte etwa eine Tiefe der Bohrung oder Ausnehmung 129 bestimmt werden. Ferner kann jedoch mit dem Tastarms 69a jedoch auch eine Erfassung des Innendurchmessers der Bohrung oder Ausnehmung 129 durchgeführt werden.

Die modulare Gestaltung der Messeinrichtung 48 erlaubt die Durchführung verschiedener Messaufgaben mit einem einzigen Modulbausatz 114. Erforderliche Umrüstarbeiten können ohne großen Aufwand durchgeführt werden. So ist es ermöglicht, Außendurchmesser von Werkstücken 96 hochgenau zu bestimmen. Gemäß einer abgewandelten Messaufgabe kann eine Erfassung einer Zylindrizität oder Exzentrizität erfolgen. Dies kann durch eine Kopplung der Antriebe der Werkstückspindelachse 20 (C-Achse) und der Werkzeugeinheit 28 erfolgen. Ein definiertes Verfahren der Werkzeugeinheit 28 parallel zur Werkstückspindelachse 20 in der Z-Richtung erlaubt ein sogenannten Längspositionieren des zumindest einen Schaltmesskopfes 66, 68, also etwa ein axiales Antasten einer Anschlagfläche. Mit einem entsprechend gekrümmten Tastarm können ferner axiale Bohrungen im Werkstück vermessen werden, etwa um deren Durchmesser zu bestimmen. Ein radiales Verfahren der Werkzeugeinheit 28 (X-Richtung) erlaubt ein sogenanntes Umfangspositionieren, also ein radiales Antasten des Werkstücks 96. Durch Kombination verschiedener Funktionen können auch komplexe Messaufgaben absolviert werden, etwa das Vermessen von Längsnuten oder Umfangsnuten.

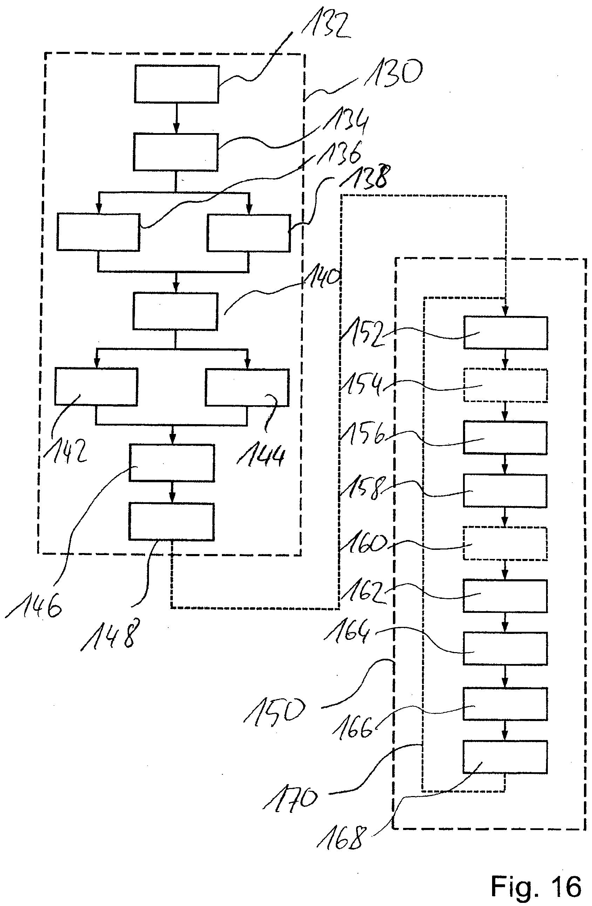

Fig. 16 veranschaulicht verschiedene Schritte eines Verfahrens zur Vermessung von Werkstücken, das etwa mit der Werkzeugmaschine 10 durchgeführt werden kann.

Das Verfahren kann einen initialen Block 130 aufweisen, der etwa ein Eichen bzw. Kalibrieren umfassen kann. In einem ersten Schritt 132 wird ein Referenzmaß, etwa eines Referenzkörpers, bereitgestellt und in einen Messbereich eingeführt. Das Einführen kann etwa durch ein Verschwenken einer Messeinrichtung erfolgen.

In einem nachgelagerten Schritt 134 kann ein erstes Antasten des Referenzmaßes etwa mit einem ersten Schaltmesskopf erfolgen. Das erste Antasten 134 kann etwa durch die Schritte 136, 138 abgeschlossen werden. Der optionale Schritt 136 kann ein elektrisches Eichen eines Messkreises des ersten Schaltmesskopfes umfassen. Der Schritt 138 kann ein Erfassen einer Ist-Lage entlang einer X-Achse bzw. Zustellachse beinhalten.

Anschließend kann sich ein Schritt 140 anschließen, der ein zweites Antasten mittels eines zweiten Schaltmesskopfes umfasst. Der Schritt 140 des zweiten Antastens kann die Schritte 142, 144 umfassen, die den Schritt 140 beschließen können. Der optionale Schritt 142 kann das elektrische Eichen eines Messkreises des zweiten Schaltmesskopfes umfassen. Der Schritt 144 kann das Erfassen einer zweiten Ist-Lage entlang der Zustellachse bzw. der X-Achse beinhalten.

In einem nachgelagerten Schritt 146 kann ausgehend von den erfassten Werten und dem bekannten Referenzmaß ein Basisabstand ermittelt werden, der als Grundlage für weitere Messungen dienen kann. Ein Schritt 148 beschließt das Eichen bzw. Kalibrieren.

Ein mit 150 beschriebener Block beschreibt beispielhaft das Vermessen eines Werkstücks unter Verwendung des zuvor ermittelten Basisabstands. In einem ersten Schritt 152 wird ein zu vermessendes Werkstück aufgenommen und etwa durch Verschwenken der Messeinrichtung in deren Messbereich eingebracht.

In einem fakultativen Schritt 154 kann eine Vorposition mit einer ersten Zustellgeschwindigkeit angefahren werden. In einem weiteren Schritt 156 kann eine erste Messposition angefahren werden, in der ein erstes Antasten des Werkstücks mit dem ersten Schaltmesskopf erfolgt. Das Anfahren kann etwa mit einer zweiten Zustellgeschwindigkeit erfolgen. In einem weiteren Schritt 158 können die mit dem ersten Antasten verknüpften Positionswerte aufgenommen werden.

In einem nachgelagerten fakultativen Schritt 160 kann eine zweite Vorposition mit der ersten Zustellgeschwindigkeit angefahren werden. Ein nachgelagerter Schritt 162 umfasst das Anfahren einer zweiten Messposition, in der der zweite Schaltmesskopf das Werkstück 96 kontaktieren kann. Das Anfahren kann etwa mit einer zweiten Zustellgeschwindigkeit erfolgen. In einem weiteren Schritt 164 werden die mit dem zweiten Antasten verknüpften Positionswerte aufgenommen.

Dem ersten und dem zweiten Antasten schließt sich ein Schritt 166 an, in dem ausgehend von den gewonnenen Daten und dem Basisabstand ein Ist-Abstand ermittelt wird. Der Messvorgang wird durch einen Schritt 168 abgeschlossen, der etwa auch ein Ausschwenken der Messeinrichtung umfassen kann. Ein Pfeil 170 deutet an, dass nach einmaligem Eichen eine Mehrzahl von Messungen durchgeführt werden kann. Dabei können verschiedene Ist-Abstände ermittelt werden, sofern sie in den Messbereich eingebracht werden können.

Die beschriebenen Verfahrensschritte können etwa Gegenstand eines Maschinensteuerungsprogramms sein.

## Patentansprüche

1. Werkzeugmaschine, insbesondere Schleifmaschine, die Folgendes aufweist:
- eine Werkstückaufnahme (14) mit zumindest einem Werkstückhalter (16, 18) zur Aufnahme eines Werkstücks (96),
- eine Werkzeugeinheit (28) mit einer Werkzeugspindel (30), insbesondere mit einem Schleifkopf, zur Aufnahme und zum Antrieb eines Werkzeugs (32), insbesondere zumindest einer Schleifscheibe, wobei die Werkzeugeinheit (28) zumindest entlang einer Zustellachse (70) relativ zum Werkstück (96) verfahrbar ist,
- eine Messeinrichtung (48), die an der Werkzeugeinheit (28) aufgenommen ist, wobei die Messeinrichtung (48) zumindest einen Schaltmesskopf (66; 68) aufweist, und
- eine Steuereinrichtung (56), die mit der Messeinrichtung (48) und der Werkzeugeinheit (28) gekoppelt ist, wobei die Steuereinrichtung (56) dazu ausgebildet ist, durch den zumindest einen Schaltmesskopf (66; 68) beim Antasten eines Werkstücks (96) ausgelöste Signale zu erfassen und anhand einer Ist-Lage der Werkzeugeinheit (28) eine Ist-Position des zumindest einen Schaltmesskopfes (66; 68) zu ermitteln,
**dadurch gekennzeichnet, dass**
die Messeinrichtung (48) als modulare Messeinrichtung (48) ausgebildet ist, und dass der zumindest eine Schaltmesskopf (66; 68) an einem Trägerstück (80) aufgenommen ist, das eine Mehrzahl von definierten Soll-Lagen für den zumindest einen Schaltmesskopf (66; 68) bereitstellt.

2. Werkzeugmaschine (10) nach Anspruch 1, **dadurch gekennzeichnet, dass** die modulare Messeinrichtung (48) zumindest zwei Schaltmessköpfe (66, 68) aufweist, die zueinander beabstandet am Trägerstück (80) aufgenommen sind, wobei die zumindest zwei Schaltmessköpfe (66, 68) in einer ersten Messkonfiguration einen Basisabstand (86) voneinander aufweisen, der einen Messbereich (78) definiert, wobei der Basisabstand (86) größer als ein bekanntes Referenzmaß (84) gewählt ist, und wobei die Steuereinrichtung (56) dazu ausgebildet ist, eine Ist-Lage der Werkzeugeinheit (28) entlang der Zustellachse (70) zu erfassen, und auf Basis eines Verfahrweges (98) der Werkzeugeinheit (28) beim Antasten eines Werkstücks (96), das in den Messbereich (78) eingebracht ist, mit den zumindest zwei Schaltmessköpfen (66, 68) unter Berücksichtigung des Referenzmaßes (84) und/oder des Basisabstands (86) einen Ist-Abstand (100), insbesondere einen Ist-Durchmesser, zu ermitteln.

3. Werkzeugmaschine (10) nach Anspruch 1 oder 2, **dadurch gekennzeichnet, dass** zumindest ein Schaltmesskopf (66, 68) an einem Adapterstück (110, 112) aufgenommen ist, das auf das Trägerstück (80) abgestimmt ist und in einer Mehrzahl von definierten Soll-Lagen am Trägerstück (80) befestigbar ist

4. Werkzeugmaschine (10) nach Anspruch 2 oder 3, **dadurch gekennzeichnet, dass** die zumindest zwei Schaltmessköpfe (66, 68) in einer zweiten Messkonfiguration derart in einer Raumrichtung (40) voneinander beabstandet am Trägerstück (80) aufgenommen sind, dass ein Schaltmesskopf (66; 68) das Werkstück (96) axial antasten kann.

5. Werkzeugmaschine (10) nach einem der vorhergehenden Ansprüche, **dadurch gekennzeichnet, dass** zumindest ein Schaltmesskopf (66; 68) einen gekrümmten Tastarm aufweist (67; 69), der unter einem Winkel zu einer Längsachse des Schaltmesskopfes ausläuft (66; 68).

6. Werkzeugmaschine (10) nach einem der Ansprüche 2 bis 5, **dadurch gekennzeichnet, dass** die Messeinrichtung (48) einen Messaufsatz (50) aufweist, an dem die zumindest zwei Schaltmessköpfe (66, 68) aufgenommen sind, wobei der Messaufsatz (50) verschwenkbar ist, um das Werkstück (96) in den Messbereich (78) einzubringen.

7. Werkzeugmaschine (10) nach einem der vorhergehenden Ansprüche, **dadurch gekennzeichnet, dass** die Messeinrichtung (48) einen Koppelgetriebemechanismus (64) aufweist, der ein Verschwenken zwischen einer Messstellung und einer Außer-Eingriff-Stellung erlaubt.

8. Werkzeugmaschine (10) nach einem der vorhergehenden Ansprüche, **dadurch gekennzeichnet, dass** das Werkstück (96) an einer Werkstückspindel (16) aufnehmbar ist, die selektiv um eine Werkstückspindelachse (20) rotatorisch antreibbar ist, wobei die Werkstückspindelachse (20) vorzugsweise senkrecht zur Zustellachse (70) angeordnet ist, und wobei die Werkzeugspindel (30) vorzugsweise eine Werkzeugspindelachse (34) aufweist, die parallel zur Werkstückspindelachse (20) angeordnet ist.

9. Werkzeugmaschine (10) nach Anspruch 8, **dadurch gekennzeichnet, dass** die Werkzeugeinheit (28) parallel zur Werkstückspindelachse (20) relativ zum Werkstück (96) verfahrbar ist.

10. Werkzeugmaschine (10) nach Anspruch 8 oder 9, **dadurch gekennzeichnet, dass** die Steuereinrichtung (56) dazu ausgebildet ist, bei einer gekoppelten Bewegung die Werkzeugeinheit (28) selektiv entlang der Zustellachse (70) zu verfahren und die Werkstückspindel (16) selektiv um die Werkstückspindelachse (20) anzutreiben.

11. Werkzeugmaschine (10) nach einem der Ansprüche 9 oder 10, **dadurch gekennzeichnet, dass** die Steuereinrichtung (56) dazu ausgebildet ist, bei einer gekoppelten Bewegung ferner die Werkzeugeinheit (28) selektiv parallel zur Werkstückspindelachse (20) zu verfahren.

12. Werkzeugmaschine (10) nach einen der vorhergehenden Ansprüche, **dadurch gekennzeichnet, dass** die Steuereinrichtung (56) dazu ausgebildet ist, anhand des Ist-Abstands (100) des Werkstücks (96), insbesondere des Ist-Durchmessers, die Werkzeugeinheit (28) und das Werkzeug (32) in einem nachgelagerten Bearbeitungsgang selektiv anzutreiben und zu verlagern.

13. Verfahren zur Vermessung eines Werkstücks in einer Werkzeugmaschine (10), insbesondere einer Schleifmaschine, mit den folgenden Schritten:
- Bereitstellen einer modularen Messeinrichtung (48), die zumindest entlang einer Zustellachse (70) relativ zu einem Werkstück (96) verfahrbar ist, das an einer Werkstückaufnahme (14) aufgenommen ist, wobei die Messeinrichtung (48) an einer Werkzeugeinheit (28) mit einer Werkzeugspindel (30) aufgenommen ist, wobei die Messeinrichtung (48) zumindest einen Schaltmesskopf (66; 68) aufweist, der an einem Trägerstück (80) aufgenommen ist, das eine Mehrzahl von definierten Soll-Lagen für den zumindest einen Schaltmesskopf (66; 68) bereitstellt,
- Verfahren der Werkzeugeinheit (28) relativ zum Werkstück (96),
- Erfassen von Signalen, die durch den zumindest einen Schaltmesskopf (66; 68) beim Antasten eines Werkstücks (96) ausgelöst werden, und
- Ermitteln einer Ist-Position des zumindest einen Schaltmesskopfes (66; 68) anhand einer Ist-Lage der Werkzeugeinheit (28).

14. Verfahren nach Anspruch 13, ferner umfassend die folgenden Schritte:
- Bereitstellen einer modularen Messeinrichtung (48), die zumindest zwei Schaltmessköpfe (66, 68) aufweist, die zueinander beabstandet an einem Trägerstück (80) aufgenommen sind, das das eine Mehrzahl von definierten Soll-Lagen für die zumindest zwei Schaltmessköpfe (66; 68) bereitstellt,
- Vorbereitung einer Messung, umfassend:
- Einstellen eines Basisabstands (86) zwischen den zumindest zwei Schaltmessköpfen (66, 68), der größer als ein bekanntes Referenzmaß (84) einer Referenzgeometrie (82) gewählt ist und einen Messbereich (78) definiert,
- Aufnahme der Referenzgeometrie (82) in der Werkzeugmaschine (10),
- Einbringen des Referenzmaßes (84) in den Messbereich (78),
- Verfahren der Messeinrichtung (48) relativ zur Referenzgeometrie (82) und Antasten des Referenzmaßes (84) mit den Schaltmessköpfen (66, 68), dabei Erfassung der Ist-Lagen der Messeinrichtung (48), somit Erfassung des Verfahrweges (98) der Messeinrichtung (48), und
- Ermitteln des Basisabstands (86) unter Berücksichtigung des Referenzmaßes (84) und der Ist-Lagen der Messeinrichtung (48) beim Antasten,
- Durchführung zumindest einer Messung, insbesondere zur Bestimmung eines Werkstückdurchmessers, umfassend:
- Aufnahme eines Werkstücks (96) in der Werkzeugmaschine (10), Einbringen einer Messgeometrie des Werkstücks (96) in den Messbereich (78),
- Antasten der Messgeometrie des Werkstücks (96) mit den Schaltmessköpfen (66, 68), dabei Erfassung des Verfahrweges der Messeinrichtung (48), und
- Ermitteln eines Ist-Abstands (100) der Messgeometrie unter Berücksichtigung des Basisabstands (86) und des Verfahrweges der Messeinrichtung (48) beim Antasten.

15. Maschinensteuerungsprogramm, das Programmcode aufweist, der dazu ausgebildet ist, eine Steuereinrichtung (56) zu veranlassen, die Schritte des Verfahrens nach Anspruch 13 oder 14 auszuführen, wenn das Maschinensteuerungsprogramm auf der Steuereinrichtung (56) ausgeführt wird.

## Claims

1. A machine tool, in particular a grinding machine, comprising:
- a workpiece mount (14) comprising at least one workpiece holder (16, 18) for receiving a workpiece (96),
- a tool unit (28) comprising a tool spindle (30), particularly comprising a grinding head, for receiving and for driving a tool (32), particularly at least one grinding wheel, wherein the tool unit (28) is movable along at least one feed axis (70) with respect to the workpiece (96),
- a measuring device (48) which is received at the tool unit (28), wherein the measuring device (48) comprises at least one toggle measurement head (66; 68), and
- a control device (56) which is coupled to the measuring device (48) and the tool unit (28), wherein the control device (56) is configured for detecting signals that are triggered by the at least one toggle measurement head (66; 68) when touching the workpiece (96), and for determining, on the basis of an actual location of the tool unit (28), an actual position of the at least one toggle measurement head (66; 68),
**characterized in that**
the measuring device (48) is arranged as a modular measuring device (48), and **in that** the at least one toggle measurement head (66; 68) is received at a support piece (80) that provides a plurality of defined predetermined locations for the at least one toggle measurement head (66; 68).

2. Machine tool (10) according to claim 1, **characterized in that** the modular measuring device (48) comprises at least two toggle measurement heads (66, 68) that are received at the support piece (80) in a manner spaced to one another, wherein the at least two toggle measurement heads (66, 68) comprise, in a first measurement configuration, a basic distance (86) to one another that defines a measurement region (78), wherein the basic distance (86) is selected to be larger than a known reference dimension (84), and wherein the control device (56) is configured to detect an actual location of the tool unit (28) along the feed axis (70), and to determine, on the basis of a displacement path (98) of the tool unit (28), when touching a workpiece (96) that is arranged in the measurement region (78) by means of the at least two toggle measurement heads (66, 68) under consideration of the reference dimension (84) and/or the basic distance (86) an actual distance (100), particularly an actual diameter.

3. Machine tool (10) according to claim 1 or 2, **characterized in that** at least one toggle measurement head (66, 68) is received at an adapter piece (110, 112) that is adapted to the support piece (80) and that can be mounted to the support piece (80) in a plurality of defined predetermined locations.

4. Machine tool (10) according to claim 2 or 3, **characterized in that** the at least two toggle measurement heads (66, 68) are, in a second measurement configuration, received at the support piece (80) in such a way spaced from one another in a spatial direction (40) that a toggle measurement head (66; 68) can axially touch the workpiece (96).

5. Machine tool (10) according to any of the preceding claims, **characterized in that** at least one toggle measurement head (66; 68) comprises a curved probe arm (67; 69) that runs out at an angle with respect to the toggle measurement head (66; 68).

6. Machine tool (10) according to any of the claims 2 to 5, **characterized in that** the measuring device (48) comprises a measurement attachment (50) at which the at least two toggle measurement heads (66, 68) are received, and wherein the measurement attachment (50) is pivotable to bring the workpiece (96) in the measurement region (78).

7. Machine tool (10) according to any of the preceding claims, **characterized in that** the measuring device (48) comprises a linkage mechanism (64) that permits a pivoting between a measurement position and an out-of-engagement position.

8. Machine tool (10) according to any of the preceding claims, **characterized in that** the workpiece (96) is attachable to a workpiece spindle (16) that is selectively drivable in a rotating fashion about a workpiece spindle axis (20), wherein the workpiece spindle axis (20) is preferably arranged perpendicular to the feed axis (70), and wherein the tool spindle (70) preferably comprises a tool spindle axis (34) that is arranged parallel to the workpiece spindle axis (20).

9. Machine tool (10) according to claim 8, **characterized in that** the tool unit (28) is movable with respect to the workpiece (96) in a fashion parallel to the workpiece spindle axis (20).

10. Machine tool (10) according to claim 8 or 9, **characterized in that** the control device (56) is configured to selectively move the tool unit (28) along the feed axis (70), and to selectively drive the workpiece spindle (16) about the workpiece spindle axis (20), in a coupled movement.

11. Machine tool (10) according to claim 9 or 10, **characterized in that** the control device (56) is further configured to selectively move the tool unit (28) parallel to the workpiece spindle axis (20), in a coupled movement.

12. Machine tool (10) according to any of the preceding claims, **characterized in that** the control device (56) is configured to selectively drive and move the tool unit (28) and the tool (32) in a downstream machining operation, on the basis of the actual distance (100) of the workpiece (96), particularly the actual diameter.

13. A method for measuring a workpiece in a machine tool (10), particularly a grinding machine, comprising the following steps:
- providing a modular measuring device (48) which is movable with respect to a workpiece (96), which is received at a workpiece holder (14), along at least one feed axis (70), wherein the measuring device (48) is received at a tool unit (28) comprising a tool spindle (30), wherein the measuring device (48) comprises at least one toggle measurement head (66; 68) that is received at a support piece (80) that provides a plurality of defined predetermined locations for the at least one toggle measurement head (66; 68),
- moving the tool unit (28) with respect to the workpiece (96),
- detecting signals that are triggered by the at least one toggle measurement head (66; 68) when touching a workpiece (96), and
- determining an actual position of the at least one toggle measurement head (66; 68) on the basis of an actual location of the tool unit (28).

14. Method according to claim 13, further comprising the following steps:
- providing a modular measuring device (48) that comprises at least two toggle measurement heads (66, 68) that are received at a support piece (80) in a manner spaced to one another, which support piece (80) provides a plurality of defined predetermined locations for the at least two toggle measurement heads (66; 68),
- preparing a measurement, comprising:
- setting a basic distance (86) between the at least two toggle measurement heads (66, 68) which is greater than a known reference dimension (84) of a reference geometry (82) and which defines a measurement region (78),
- receiving the reference geometry (82) at the machine tool (10),
- bringing the reference dimension (84) in the measurement region (78),
- displacing the measuring device (48) with respect to the reference geometry (82), and touching the reference dimension (84) by means of the toggle measurement heads (66, 68), thereby detecting the actual locations of the measuring device (48), thus detecting the displacement path (98) of the measuring device (48), and
- determining the basic distance (86) under consideration of the reference dimension (84) and the actual locations of the measuring device (48) when touching,
- conducting at least one measurement, particularly for determining a workpiece diameter, comprising:
- receiving a workpiece (96) at the machine tool (10), bringing a measurement geometry of the workpiece (96) in the measurement region (78),
- touching the measurement geometry of the workpiece (96) by means of the toggle measurement heads (66, 68), thereby detecting the displacement path of the measuring device (48), and
- determining an actual distance (100) of the measurement geometry under consideration of the basic distance (86) and the displacement path of the measuring device (48) when touching.

15. A machine tool control program comprising program code which is configured to cause a control device (56) to carry out the steps of the method as claimed in claim 13 or 14 when the machine tool control program is executed on the control device (56).

## Revendications

1. Machine-outil, notamment rectifieuse, comprenant les éléments suivants :
- un logement de pièce à usiner (14) comprenant au moins un porte-pièce (16, 18) destiné à accueillir une pièce à usiner (96),
- une unité à outil (28) comprenant une broche à outil (30), comprenant notamment une tête de rectification, destinée à accueillir et à entraîner un outil (32), notamment au moins une meule, l'unité à outil (28) pouvant être déplacée par rapport à la pièce à usiner (96) au moins le long d'un axe d'approche (70),
- un dispositif de mesure (48) qui est monté sur l'unité à outil (28), le dispositif de mesure (48) possédant au moins une tête de mesure à commutation (66 ; 68), et
- un dispositif de commande (56) qui est connecté au dispositif de mesure (48) et à l'unité à outil (28), le dispositif de commande (56) étant configuré pour collecter les signaux déclenchés par l'au moins une tête de mesure à commutation (66 ; 68) lors du palpage d'une pièce à usiner (96) et déterminer, au moyen d'une position réelle de l'unité à outil (28), une position réelle de l'au moins une tête de mesure à commutation (66 ; 68),
**caractérisée en ce que**
le dispositif de mesure (48) est réalisé sous la forme d'un dispositif de mesure (48) modulaire et **en ce que** l'au moins une tête de mesure à commutation (66 ; 68) est montée sur une pièce porteuse (80) qui fournit une pluralité de positions de consigne définies pour l'au moins une tête de mesure à commutation (66 ; 68).

2. Machine-outil (10) selon la revendication 1, **caractérisée en ce que** le dispositif de mesure (48) modulaire possède au moins deux têtes de mesure à commutation (66, 68) qui sont montées espacées l'une de l'autre sur la pièce porteuse (80), les au moins deux têtes de mesure à commutation (66, 68) présentant dans une première configuration de mesure un écart de base (86) l'une par rapport à l'autre, lequel définit une zone de mesure (78), l'écart de base (86) étant choisi supérieur à une cote de référence (84) connue, et le dispositif de commande (56) étant configuré pour détecter une position réelle de l'unité à outil (28) le long de l'axe d'approche (70) et, sur la base d'une course de déplacement (98) de l'unité à outil (28) lors du palpage d'une pièce à usiner (96) qui est introduite dans la zone de mesure (78), déterminer un écart réel (100), notamment un diamètre réel avec les au moins deux têtes de mesure à commutation (66, 68) en tenant compte de la cote de référence (84) et/ou de l'écart de base (86).

3. Machine-outil (10) selon la revendication 1 ou 2, **caractérisée en ce qu'**au moins une tête de mesure à commutation (66, 68) est montée sur une pièce d'adaptation (110, 112) qui est adaptée à la pièce porteuse (80) et peut être fixée sur la pièce porteuse (80) dans une pluralité de positions de consigne définies.

4. Machine-outil (10) selon la revendication 2 ou 3, **caractérisée en ce que** les au moins deux têtes de mesure à commutation (66, 68), dans une deuxième configuration de mesure, sont montées sur la pièce porteuse (80) espacées l'une de l'autre dans une direction spatiale (40) de telle sorte qu'une tête de mesure à commutation (66 ; 68) peut palper la pièce à usiner (96) dans le sens axial.

5. Machine-outil (10) selon l'une des revendications précédentes, **caractérisée en ce qu'**au moins une tête de mesure à commutation (66 ; 68) possède un bras de palpage courbé (67 ; 69) qui se termine sous un angle donné par rapport à un axe longitudinal de la tête de mesure à commutation (66 ; 68).

6. Machine-outil (10) selon l'une des revendications 2 à 5, **caractérisée en ce que** le dispositif de mesure (48) possède un élément rapporté de mesure (50) sur lequel sont montées les au moins deux têtes de mesure à commutation (66, 68), l'élément rapporté de mesure (50) pouvant pivoter afin d'introduire la pièce à usiner (96) dans la zone de mesure (78).

7. Machine-outil (10) selon l'une des revendications précédentes, **caractérisée en ce que** le dispositif de mesure (48) possède un mécanisme à engrenage d'accouplement (64) qui permet un pivotement entre une position de mesure et une position hors prise.

8. Machine-outil (10) selon l'une des revendications précédentes, **caractérisée en ce que** la pièce à usiner (96) peut être montée sur une broche porte-pièce (16), laquelle peut être entraînée en rotation de manière sélective autour d'un axe de broche porte-pièce (20), l'axe de broche porte-pièce (20) étant disposé de préférence perpendiculairement à l'axe d'approche (70) et la broche à outil (30) possédant de préférence un axe de broche à outil (34) qui est disposé parallèlement à l'axe de broche porte-pièce (20).

9. Machine-outil (10) selon la revendication 8, **caractérisée en ce que** l'unité à outil (28) peut être déplacée parallèlement à l'axe de broche porte-pièce (20) par rapport à la pièce à usiner (96).

10. Machine-outil (10) selon la revendication 8 ou 9, **caractérisée en ce que** le dispositif de commande (56) est configuré pour, lors d'un mouvement accouplé, déplacer l'unité à outil (28) de manière sélective le long de l'axe d'approche (70) et d'entraîner de manière sélective la broche porte-pièce (16) autour de l'axe de broche porte-pièce (20).

11. Machine-outil (10) selon l'une des revendications 9 ou 10, **caractérisée en ce que** le dispositif de commande (56) est configuré pour, lors d'un mouvement accouplé, déplacer en plus l'unité à outil (28) de manière sélective parallèlement à l'axe de broche porte-pièce (20).

12. Machine-outil (10) selon l'une des revendications précédentes, **caractérisée en ce que** le dispositif de commande (56) est configuré pour, au moyen de l'écart réel (100) de la pièce à usiner (96), notamment du diamètre réel, entraîner et déplacer l'unité à outil (28) et la pièce à usiner (32) de manière sélective dans une opération d'usinage qui suit.

13. Procédé de mesurage d'une pièce à usiner dans une machine-outil (10), notamment une rectifieuse, comprenant les étapes suivantes :
- fourniture d'un dispositif de mesure (48) modulaire qui peut être déplacé au moins le long d'un axe d'approche (70) par rapport à une pièce à usiner (96) qui est montée sur un logement de pièce à usiner (14), le dispositif de mesure (48) étant monté sur une unité à outil (28) comprenant une broche à outil (30), le dispositif de mesure (48) possédant au moins une tête de mesure à commutation (66 ; 68) qui est montée sur une pièce porteuse (80), laquelle fournit une pluralité de positions de consigne définies pour l'au moins une tête de mesure à commutation (66 ; 68),
- déplacement de l'unité à outil (28) par rapport à la pièce à usiner (96),
- collecte de signaux qui sont déclenchés par l'au moins une tête de mesure à commutation (66 ; 68) lors du palpage d'une pièce à usiner (96), et
- détermination d'une position réelle de l'au moins une tête de mesure à commutation (66 ; 68) au moyen d'une position réelle de l'unité à outil (28).

14. Procédé selon la revendication 13, comprenant en outre les étapes suivantes :
- fourniture d'un dispositif de mesure (48) modulaire qui possède au moins deux têtes de mesure à commutation (66, 68) qui sont montées espacées l'une de l'autre sur une pièce porteuse (80), laquelle fournit une pluralité de positions de consigne définies pour les au moins deux têtes de mesure à commutation (66, 68),
- préparation d'une mesure, comprenant:
- réglage d'un écart de base (86) entre les au moins deux têtes de mesure à commutation (66, 68), lequel est choisi supérieur à une cote de référence (84) connue d'une forme géométrique de référence (82) et définit une zone de mesure (78),
- accueil de la forme géométrique de référence (82) dans la machine-outil (10),
- introduction de la cote de référence (84) dans la zone de mesure (78),
- déplacement du dispositif de mesure (48) par rapport à la forme géométrique de référence (82) et palpage de la cote de référence (84) avec les têtes de mesure à commutation (66, 68), détectant ainsi les positions réelles du dispositif de mesure (48), et ainsi détection de la course de déplacement (98) du dispositif de mesure (48), et
- détermination de l'écart de base (86) tenant compte de la cote de référence (84) et des positions réelles du dispositif de mesure (48) lors du palpage,
- réalisation d'au moins une mesure, notamment en vue de déterminer un diamètre de la pièce à usiner, comprenant :
- accueil d'une pièce à usiner (96) dans la machine-outil (10), introduction d'une forme géométrique de mesure de la pièce à usiner (96) dans la zone de mesure (78),
- palpage de la forme géométrique de mesure de la pièce à usiner (96) avec les têtes de mesure à commutation (66, 68), et ainsi détection de la course de déplacement du dispositif de mesure (48), et
- détermination d'un écart réel (100) de la forme géométrique de mesure en tenant compte de l'écart de base (86) et de la course de déplacement du dispositif de mesure (48) lors du palpage.

15. Programme de commande de machine, lequel possède un code de programme qui est configuré pour amener un dispositif de commande (56) à exécuter les étapes du procédé selon la revendication 13 ou 14 lorsque le programme de commande de machine est exécuté sur le dispositif de commande (56).
